# EUROPEAN PATENT APPLICATION

(11) **EP 4 603 326 A2**
(43) Date of publication of application: **20.08.2025**
(21) Application number: 25187157.0
(22) Date of filing: 26.07.2022
(51) Int. Cl.: B60N 2/28

(54) **BASE ASSEMBLY AND CHILD SAFETY SEAT FOR VEHICLE**

(30) Priority: 26.07.2021 CN 202110844522; 22.07.2022 CN 202210873961
(62) Divisional of application: 22755172.8
(71) Applicant: Wonderland Switzerland AG, 6312 Steinhausen (CH)
(72) Inventor: MO, Xiaolong, Dongguan, Guangdong, 523648 (CN); ZHANG, Kun, Dongguan, Guangdong, 523648 (CN); CHENG, Manqun, Dongguan, Guangdong, 523648 (CN)
(74) Representative: Pfenning, Meinig & Partner mbB

(57) **Abstract**

The present disclosure discloses a base assembly (1) and a child safety seat for a vehicle. The base assembly (1) includes a base (10); a supporting leg (20); a sliding element (30) telescopically disposed on the base (10), the supporting leg (20) being pivotally connected to the sliding element (30) and extends and retracts together with the sliding element (30); and a traction element (40) configured to pull the supporting leg (20) to move towards the base (10) as the supporting leg (20) rotating from an unfolded position to a folded position. The base assembly (1) and the child safety seat provided by the present disclosure simplify the operation of a user, so that the operation is simple and convenient, and the user's experience is good.

## Description

### TECHNICAL FIELD

The present disclosure relates to the technical field of child safety seat for vehicle, in particular to a base assembly and a child safety seat for a vehicle, which are convenient to operate.

### BACKGROUND

Child safety seats are indispensable for children to travel. In an existing child safety seat, a supporting leg structure is disposed on the base so as to improve stability and use safety of the child safety seat. When in use, the supporting leg structure is unfolded and touches the ground, and thus can well support the child safety seat to prevent the child safety seat from overturning; and when not in use, the supporting leg structure may be folded on the bottom of the base.

However, a front end of the base of the child safety seat equipped with a supporting leg structure is usually provided with a projection for installing and pivotally connecting the supporting leg structure. When the use of the supporting leg is not needed, the projection may, for example, not only negatively affect the seating experience of a child, but also increase a volume of the child safety seat, thus increasing its transportation cost.

An existing child safety seat with a retractable supporting leg structure may solve the above problem; however, it needs two steps to be folded and retract, i.e., folding the supporting leg structure, and then pushing the supporting leg structure to retract the supporting leg structure, so as to achieve the purpose of complete folding. This operation for folding the supporting leg structure is complicated and has a poor user experience.

### SUMMARY

The objective of the present disclosure is to provide a base assembly and a child safety seat for a vehicle which are convenient to operate.

To achieve the above objective, in an aspect, the present disclosure provides a base assembly including: a base; a supporting leg; a sliding element telescopically disposed on the base, the supporting leg being pivotally connected to the sliding element and extends and retracts together with the sliding element; and a traction element configured to pull the supporting leg to move towards the base rotate as the supporting leg rotating from an unfolded position to a folded position, so as to pull the supporting leg to move towards the base.

In an embodiment, the traction element is a flexible element.

In an embodiment, the flexible element is a steel wire, a cord or a webbing.

In an embodiment, the base assembly further includes a driving element pivoted with the supporting leg, and the driving element is configured to roll up the traction element so that the supporting leg is pulled to move towards the base.

In an embodiment, the driving element is disposed on the supporting leg, and the driving element is integrally formed with the supporting leg and formed as a part of the supporting leg; alternatively, the driving element and the supporting leg are independently formed and fixedly connected by a fixing structure.

In an embodiment, the driving element is located at an upper end of the supporting leg.

In an embodiment, the driving element is shaped as a boss, and the driving element is provided with an arc-shaped part matched with the traction element; alternatively, the driving element is shaped as a pulley; alternatively, the driving element is shaped as a column.

In an embodiment, a first end of the traction element is connected with the base, and a second end of the traction element is connected with one of the driving element and the upper end of the supporting leg.

In an embodiment, an inner top wall of the base is provided with a fixing column, and the first end of the traction element is fixed on the fixing column by a first fastener.

In an embodiment, the base assembly further includes a stroke enlarging mechanism having a first end connected with the base and a second end connected with the supporting leg through the traction element.

In an embodiment, the stroke enlarging mechanism is a rhombic telescopic frame.

In an embodiment, a fixing frame is disposed in the base, and the first end of the stroke enlarging mechanism is connected with the fixing frame through a second fastener.

In an embodiment, the stroke enlarging mechanism is a pulley mechanism.

In an embodiment, the pulley mechanism includes a movable pulley disposed on the sliding element; a fixed pulley disposed on the base; and a linkage connecting the movable pulley and the fixed pulley; wherein the first end of the traction element is connected with the movable pulley.

In an embodiment, a first end of the linkage is fixed on the sliding element, and a second end of the linkage bypasses the movable pulley and the fixed pulley to be fixed on the sliding element.

In an embodiment, the fixed pulley includes a first fixed pulley and a second fixed pulley which are symmetrically disposed, and the linkage includes a first linkage and a second linkage which are symmetrically disposed. A first end of the first linkage is fixed on the sliding element, and a second end of the first linkage bypasses the movable pulley and the first fixed pulley to be fixed on the sliding element; and a first end of the second linkage is fixed on the sliding element, and a second end of the second linkage bypasses the movable pulley and the second fixed pulley to be fixed on the sliding element.

In an embodiment, the pulley mechanism includes a movable pulley disposed on the sliding element; a first fixed pulley disposed on the sliding element; a second fixed pulley disposed on the base; and a linkage connecting the first fixed pulley, the movable pulley and the second fixed pulley; wherein the first end of the traction element is connected with the movable pulley.

In an embodiment, the base is provided with a positioning column, the sliding element is provided with an avoidance groove to avoid the positioning column, the first end of the linkage is fixed on the positioning column, and the second end of the linkage bypasses the first fixed pulley, the movable pulley and the second fixed pulley and is fixed on the sliding element.

In an embodiment, the sliding element is provided with a sliding groove for the movable pulley to slide.

In an embodiment, the base assembly further includes a supporting leg indicator linked with the second end of the stroke enlarging mechanism, and the sliding element is provided with an indication window for at least partially exposing the supporting leg indicator.

In an embodiment, a buffer elastic element is disposed at a connection of the second end of the traction element and the supporting leg.

In an embodiment, the base assembly further includes a base bracket disposed in the base, and the sliding element comprises a sliding bracket slidably connected to the base bracket, a sliding groove is provided on one of the base bracket and the sliding bracket, and a sliding rod matched with the sliding groove is provided on the other of the base bracket and the sliding bracket.

In another aspect, the present disclosure provides a child safety seat for a vehicle. The child safety seat includes a base assembly as described above and a seat disposed on the base assembly.

In an embodiment, the seat is rotatably disposed on the base and has at least a forward position and a backward position. The child safety seat has a first use mode and a second use mode. In the first use mode, the sliding element extends outside and the supporting leg is unfolded to form a ground-contact support, and in the second use mode, the sliding element retracts and the supporting leg is folded at the bottom of the base.

In an embodiment, an accommodating groove for accommodating the supporting leg is provided on the bottom of the base, and after the supporting leg is folded at the bottom of the base, a lower surface of the supporting leg does not protrude from a bottom surface of the base.

To achieve the above objective, in an aspect, the present disclosure provides a base assembly including: a base; a supporting leg provided with a gear; and a sliding element telescopically disposed on the base and provided with a rack; wherein the gear is engaged with the rack, so that movement of the sliding element to an extended position is linked with pivoting of the supporting leg to an unfolded position, and movement of the sliding element to a retracted position is linked with pivoting of the supporting leg to a folded position.

In an embodiment, the base assembly further includes a conversion structure having a first end connected to the sliding element and a second end connected to the base, the rack being fixed in a position between the first end and the second end, and the conversion structure is correspondingly elongated or shortened in response to increasing or decreasing of a distance between the sliding element and the base.

In an embodiment, the conversion structure is composed of at least one X-shaped unit.

In an embodiment, each of the at least one X-shaped unit is formed by two sheets pivotally connected to each other.

In an embodiment, the base assembly further includes a first restoring element configured to constantly bias the supporting leg towards the unfolded position.

In an embodiment, the base assembly further includes a second restoring element configured to constantly bias the sliding element towards the extended position.

In an embodiment, the second restoring element is a tension spring, and has an end fixed to the base and the other end fixed to the sliding element.

In an embodiment, the base includes a locking element operatively locking the supporting leg to the folded position.

In an embodiment, the base includes a stepped portion, wherein the stepped portion prevents the sliding element from moving to the extended position by abutting against the supporting leg when the supporting leg is in the folded position.

In another aspect, the present disclosure provides a child safety seat for a vehicle. The child safety seat includes a base assembly as described above and a seat disposed on the base assembly.

### BRIEF DESCRIPTION OF THE DRAWINGS

Various objects, features and advantages of the present disclosure will become more apparent by considering the following detailed description of preferred embodiments of the present disclosure in conjunction with the accompanying drawings. The drawings are only exemplary illustrations of the present disclosure and are not necessarily drawn to scale. In the drawings, the same reference numbers refer to the same or similar parts, wherein:
FIG. 1 is a side view of a child safety seat for a vehicle of the present disclosure, in which a supporting leg of a base assembly is in an unfolded position;
FIG. 2 is a side view of the child safety seat of the present disclosure, in which the supporting leg of the base assembly is in a folded position;
FIG. 3 is a perspective view of the base assembly of the present disclosure, in which the supporting leg of the base assembly is in the unfolded position;
FIG. 4 is a perspective view of the base assembly of the present disclosure, in which the supporting leg of the base assembly is in the folded position;
FIG. 5 is a cross-sectional view of a first embodiment of the base assembly of the present disclosure, in which the supporting leg of the base assembly is in the unfolded position;
FIG. 6 is a cross-sectional view of the first embodiment of the base assembly of the present disclosure, wherein the supporting leg of the base assembly is in the folded position;
FIG. 7 is a bottom perspective view of the first embodiment of the base assembly of the present disclosure, in which the supporting leg of the base assembly is in the unfolded position, and some parts are removed to show an internal structure of the base assembly;
FIG. 8 is a bottom perspective view of the first embodiment of the base assembly of the present disclosure, in which the supporting leg of the base assembly is in the folded position;
FIG. 9 is a side sectional view of the first embodiment of the base assembly of the present disclosure, in which the supporting leg of the base assembly is in the folded position;
FIG. 10 is a partial side cross-sectional view of a second embodiment of the base assembly of the present disclosure, in which the supporting leg of the base assembly is in the unfolded position;
FIG. 11 is a partial side sectional view of the second embodiment of the base assembly of the present disclosure, in which the supporting leg of the base assembly is in the folded position;
FIG. 12 is a plan view of a part of the structure of the second embodiment of the base assembly of the present disclosure, in which the supporting leg of the base assembly is in the unfolded position;
FIG. 13 is a partial perspective view of a part of the structure of the second embodiment of the base assembly of the present disclosure, in which the supporting leg of the base assembly is in the unfolded position;
FIG. 14 is a plan view of a part of the structure of the second embodiment of the base assembly of the present disclosure, wherein the supporting leg of the base assembly is in the folded position;
FIG. 15 is a perspective view of the second embodiment of the base assembly of the present disclosure, in which the supporting leg of the base assembly is in the unfolded position;
FIG. 16 is a perspective view of the second embodiment of the base assembly of the present disclosure, in which the supporting leg of the base assembly is in the unfolded position, and some parts are removed to show the internal structure of the base assembly;
FIG. 17 is a partial perspective view of a third embodiment of the base assembly of the present disclosure, in which the supporting leg of the base assembly is in the unfolded position;
FIG. 17A is a partial perspective view of a modification of the third embodiment of the base assembly of the present disclosure, in which the supporting leg of the base assembly is in the unfolded position;
FIG. 18 is a partial perspective view of the third embodiment of the base assembly of the present disclosure, in which the supporting leg of the base assembly is in the folded position;
FIG. 19 is a partial cross-sectional view of the third embodiment of the base assembly of the present disclosure, in which the supporting leg of the base assembly is in the unfolded position;
FIG. 20 is a partial perspective view of a fourth embodiment of the base assembly of the present disclosure, in which the supporting leg of the base assembly is in the unfolded position;
FIG. 21 is a partial perspective view of the fourth embodiment of the base assembly of the present disclosure, in which the supporting leg of the base assembly is in the folded position;
FIG. 22 is a partial perspective view of a fifth embodiment of the base assembly of the present disclosure, in which the supporting leg of the base assembly is in the unfolded position;
FIG. 23 is a partial perspective view of the fifth embodiment of the base assembly of the present disclosure, in which the supporting leg of the base assembly is in the folded position;
FIG. 24 is a partial perspective exploded view of the base assembly of the present disclosure;
FIG. 25 is a perspective view of a base assembly of the present disclosure, in which a supporting leg of a base assembly is in an unfolded position;
FIG. 26 is a perspective view of the base assembly of the present disclosure, in which the supporting leg of the base assembly is in a folded position;
FIG. 27 is a perspective view of the base assembly of the present disclosure, in which the supporting leg of the base assembly is in the unfolded position, and some of components of the base assembly are removed to show an internal structure of the base assembly;
FIG. 28 is a perspective view of some of the components of the base assembly of the present disclosure;
FIG. 29 is a perspective view of some of the components of the base assembly of the present disclosure, in which an upper housing is removed compared with FIG. 28;
FIG. 30 is a side cross-sectional view of the base assembly of the present disclosure, in which the supporting leg of the base assembly are in a folded position;
FIG. 31 is a partial enlarged view of a part A of FIG. 30;
FIG. 32 is a partial enlarged view of a part B of FIG. 30;
FIG. 33 is a bottom perspective view of the base assembly of the present disclosure, in which the supporting leg of the base assembly is in the folded position;
FIG. 34 is a side cross-sectional view of the base assembly of the present disclosure, in which the supporting leg of the base assembly is near an unfolded position;
FIG. 35 is a partial enlarged view of a part C of FIG. 34;
FIG. 36 is a partial top view of the base assembly of the present disclosure, in which the sliding element of the base assembly is in an extended position and some of components of the base assembly are removed to show the internal structure of the base assembly;
FIG. 37 is a partial top view of the base assembly of the present disclosure, in which the sliding element of the base assembly is in the extended position and some of components of the base assembly are removed to show the internal structure of the base assembly; and
FIG. 38 is a partial top view of the base assembly of the present disclosure, in which the sliding element of the base assembly is in a retracted position and some of components of the base assembly are removed to show the internal structure of the base assembly.

### List of reference numbers:

Base Assembly 1
   Base 10
      Fixing Column 110
      Fixing Frame 120
      Turntable 130
      Positioning Column 150
      Base Bracket 160
         Sliding Rod 161
      Accommodating Groove 170
      Locking Element 180
      Stepped Portion 190
   Supporting Leg 20
      First Section 210
      Second Section 220
      Connecting Element 240
      Protective Cover 250
      Locking Hole 280
   Sliding Element 30
      Avoidance Groove 310
      Sliding Groove 320
      Indication Window 330
      Sliding Bracket 340
         Sliding Groove 341
         Supporting Leg Bracket 342
            Sliding Slot 3421
      Housing 350
         Upper Housing 351
         Lower Housing 352
      Bushing 360
   Traction Element 40
      Buffer Elastic Element 410
      Traction Element Limit Groove 420
   Driving Element 50
      Arc-shaped Part 510
      First Restore Element 520
      Second Restore Element 530
      Rack 540
      Gear 550
   Stroke Enlarging Mechanism 60
      Movable Pulley 610
      Fixed Pulley 620
         First Fixed Pulley 621
         Second Fixed Pulley 622
      Linkage 630
         First Linkage 631
         Second Linkage 632
   Supporting Leg Indicator 70
   Pivot Shaft 80
   Conversion Structure 90
      First End 910
      Second End 920
      Connecting Portion 930
Seat 2

### DETAILED DESCRIPTION

In order to explain the whole concept of the present disclosure more clearly, the following detailed description will be made by way of example with reference to the attached drawings of the specification.

It should be noted that in the following description, many specific details are set forth in order to fully understand the present disclosure. However, the present disclosure can be implemented in other ways different from those described here. Therefore, the protection scope of the present disclosure is not limited by the specific embodiments disclosed below.

In addition, in the description of the present disclosure, it should be understood that the terms "center", "up", "down", "front", "back", "left", "right", "vertical", "horizontal", "top", "bottom", "inside", "outside", "axial", "radial", "circumferential", etc. indicate the orientation or positional relationship based on the orientation or positional relationship shown in the drawings, which are only for the convenience of describing the present disclosure and simplifying the description, rather than indicating or implying that the indicated device or component must have a specific orientation, or must be constructed and operated in a specific orientation, and therefore should not be construed as a limitation on the present disclosure.

In the present disclosure, unless otherwise specified and limited, the terms "installed", "connected", "coupled" and "fixed" should be understood broadly, for example, may be fixed, detachable or integrated; or may be directly connected or indirectly connected through an intermediate medium, and may be in an internal communication of two components or an interaction between two components. However, direct connection means that two connected subjects do not build a connection relationship through excessive structure, but only form an integrated part through a connection structure. For those of ordinary skill in the art, the specific meanings of the above terms in the present disclosure can be understood according to specific situations.

In the present disclosure, unless otherwise specified and limited, a first feature "on" or "under" a second feature may be in direct contact between the first and second features, or in indirect contact between the first and second features through an intermediate medium. In the description of this specification, the description referring to the terms "an embodiment", "some embodiments", "example", "specific example" or "some examples" means that the specific features, structures, materials or characteristics described in connection with the embodiment or example are included in at least one embodiment or example of the present disclosure. In this specification, the schematic expressions of the above terms do not necessarily refer to the same embodiment or example. Furthermore, the specific features, structures, materials or characteristics described may be combined in any one or more embodiments or examples in a suitable manner.

The present disclosure provides a child safety seat for a vehicle, which may be installed on a vehicle seat for a baby or a child to seat, and ensures the safety of the passenger.

A first embodiment of the present disclosure will be described below.

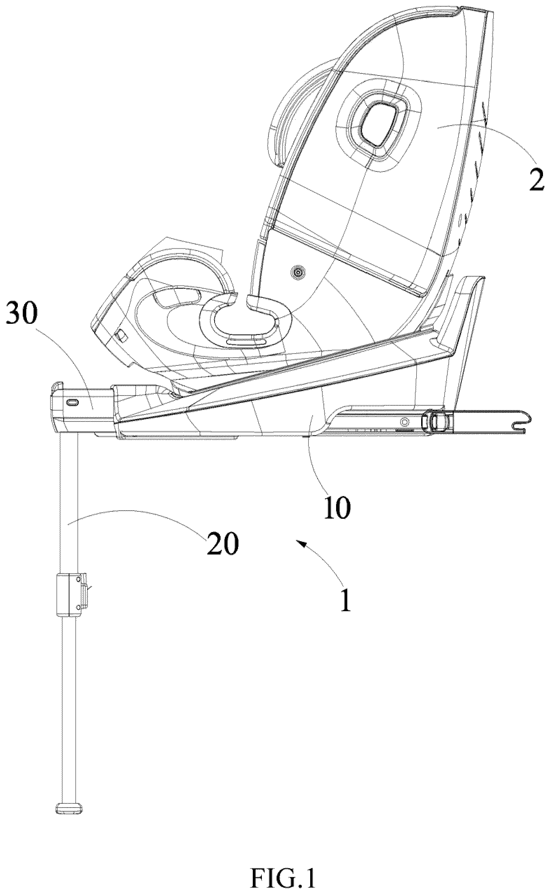

As shown in FIGS. 1-4, the child safety seat may have a base assembly 1 and a seat 2. The base assembly 1 may have a base 10 and a supporting leg 20. The seat 2 is rotatably disposed on the base 10 and at least has a forward position and a backward position. The forward position may be that the seat 2 faces the front of the vehicle, and the backward position may be that the seat 2 faces the rear of the vehicle. The forward position may be applied to an older child, for example, and the backward position may be applied to a younger child, for example. However, the present disclosure is not limited thereto.

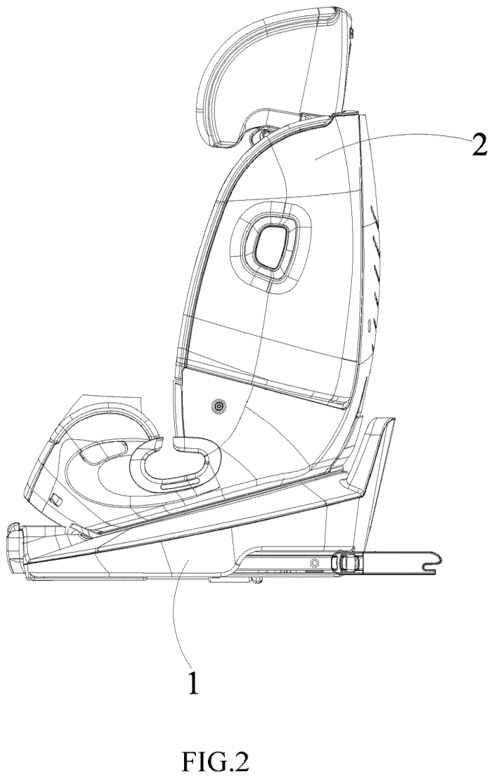

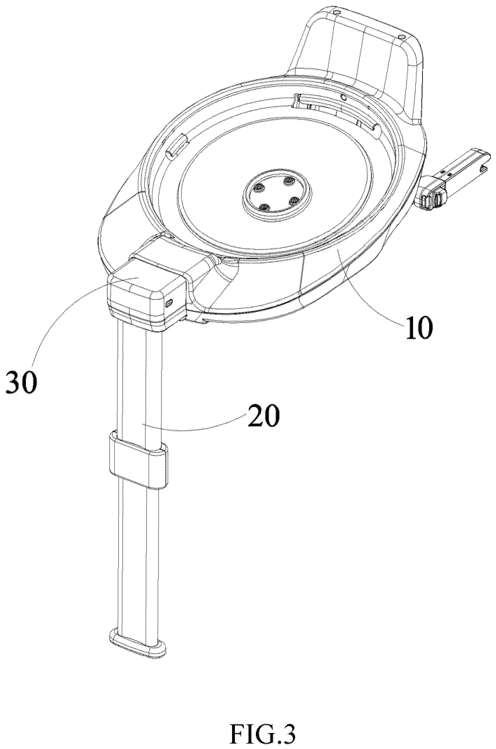

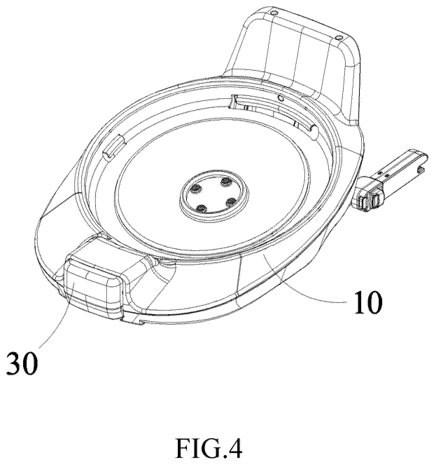

The supporting leg 20 is rotatably and telescopically connected to the base 10. When the supporting leg 20 is used, the supporting leg 20 may extend out of the base 10 and pivot to touch the ground (as shown in FIGS. 1 and 3), so that the child safety seat may be prevented from overturning during the impact. When the supporting leg 20 are not needed, the supporting leg 20 may be rotated and retracted synchronously to the bottom of the base 10 (as shown in FIGS. 2 and 4), so that the overall size of the child safety seat may be reduced, and it is convenient to store and use.

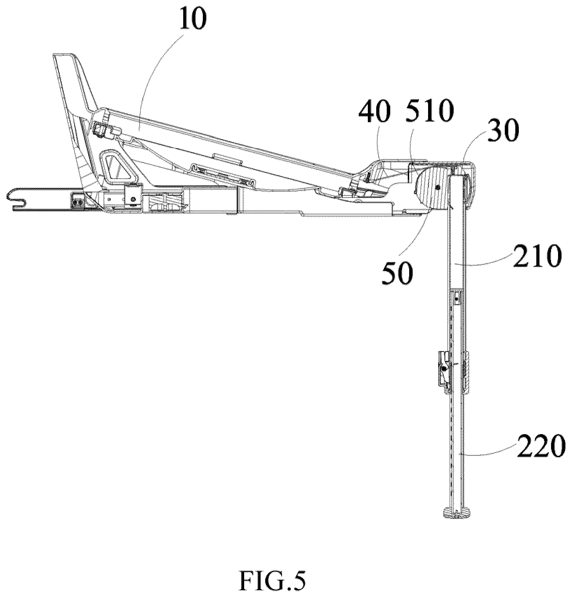

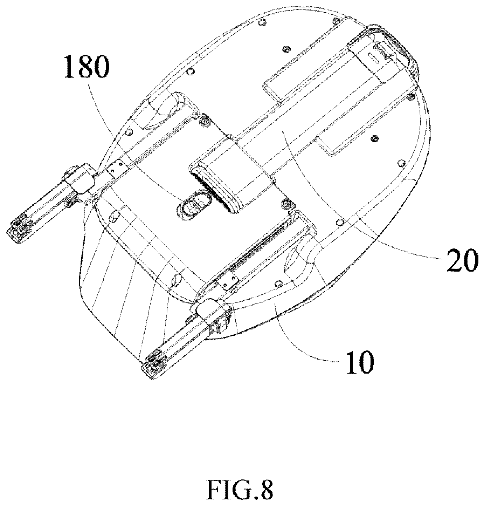

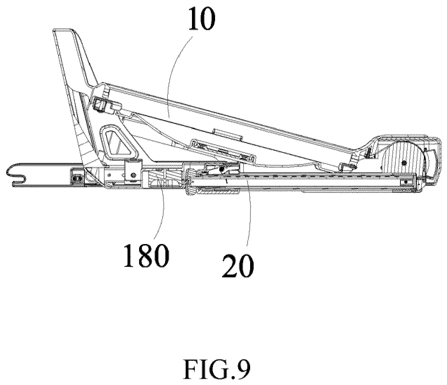

Referring to FIGS. 5-9, the base assembly 1 may further include a sliding element 30 and a traction element 40. The sliding element 30 is telescopically disposed on the base 10, and the supporting leg 20 is pivotably connected to the sliding element 30, and is extended and retracted with the sliding element 30. The traction element 40 is configured to rotate the supporting leg 20 from an unfolded position to a folded position, so as to pull the supporting leg 20 to move towards the base 10. At this time, the sliding element 30 moves towards the base 10 together with the supporting leg 20.

The base assembly 1 may further include a driving element 50 that pivots with the supporting leg 20. When the supporting leg 20 is folded, the driving element 50 rolls up the traction element 40 to pull the supporting leg 20 and the sliding element 30 to move towards the base 10.

The traction element 40 is a flexible element, such as a steel wire, a cord or a webbing, and the present disclosure is not limited thereto. One end of the traction element 40 is connected with the base 10, and the other end of the traction element 40 is connected with the supporting leg 20. Optionally, the other end of the traction element 40 is fixed to an upper end of the supporting leg 20.

The driving element 50 is disposed on the supporting leg 20, for example, the driving element 50 is located at the upper end of the supporting leg 20. The driving element 50 is formed as an integral structure with the supporting leg 20 and may be formed as a part of the supporting leg 20. Optionally, the driving element 50 and the supporting leg 20 may be formed separately, and may be connected and fixed to each other by a fixing structure.

The driving element 50 may be shaped as a boss. In this embodiment, the driving element 50 is provided with an arc-shaped part 510 (referring to FIG. 5) which is matched with the traction element 40. Optionally, the driving element 50 may be shaped as a pulley. Optionally, the driving element 50 may be shaped as a column.

As the driving element 50 pivots with the supporting leg 20, the traction element 40 surrounds an outer periphery of the driving element 50, so that the other end of the traction element 40 pulls the upper end of the supporting leg 20, thereby moving the supporting leg 20 and the sliding element 30 towards the base 10 together. Optionally, the driving element 50 may have other profiles than the arc shape.

As shown in FIG. 5, the supporting leg 20 includes a first section 210 and a second section 220. The first section 210 and the second section 220 may be formed into a sleeve-like structure, and the second section 220 may be disposed inside the first section 210, and may move relative to the first section 210, so as to elongate or shorten the supporting leg 20.

Referring to FIGS. 5-6, when the supporting leg 20 is pivoted and folded, the second section 220 of the supporting leg 20 is pushed to retract into the first section 210, and then the supporting leg 20 is pushed to the left, so that the supporting leg 20 is pivoted clockwise. When the supporting leg 20 is pivoted, the traction element 40 drives the supporting leg 20 and the sliding element 30 to move towards the inside of the base 10, so that the supporting leg 20 is pivoted and retracted inward simultaneously. Finally, the sliding element 30 may be moved to a position at least partially located in the base 10, so that the sliding element 30 does not protrude or slightly protrudes from the front of the base 10. This will further shorten the overall size of the child safety seat in the front-rear direction.

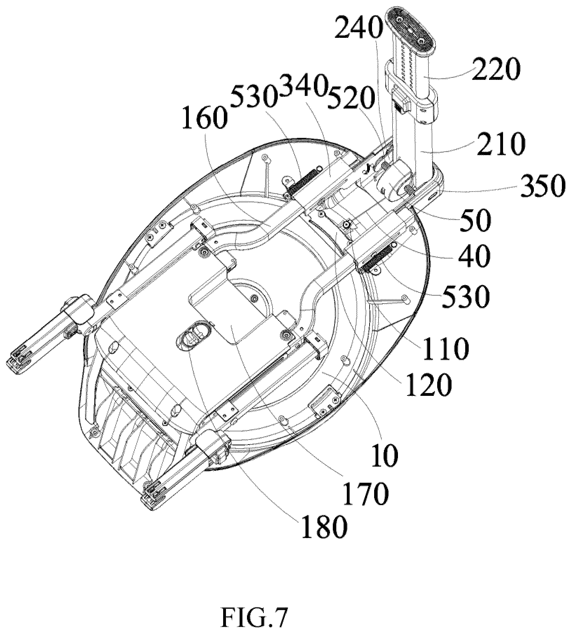

Referring to FIG. 7, the base 10 may have a fixing frame 120 and a base bracket 160. The fixing frame 120 and the base bracket 160 may be used as a carrier. The inner top wall of the base 10 is provided with a fixing column 110, and the traction element 40 is fixed on the fixing column 110 by a first fastener.

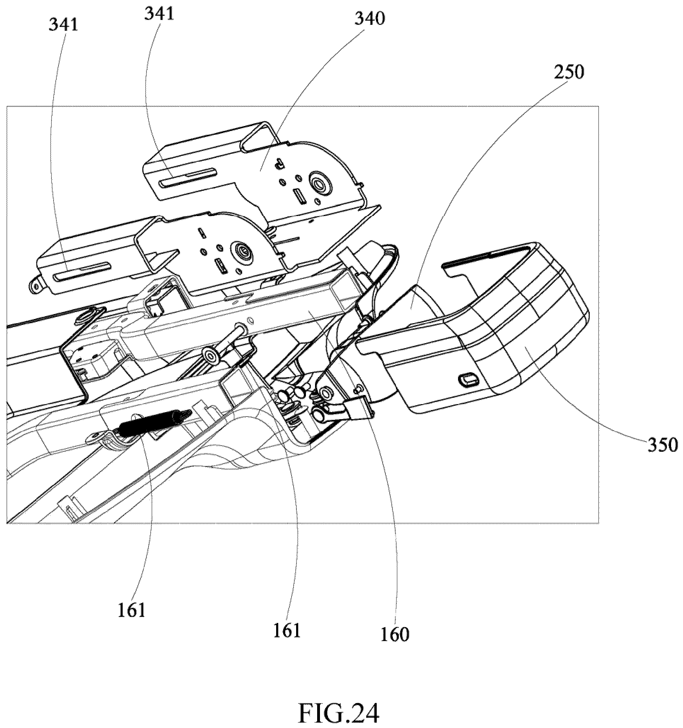

The sliding element 30 includes a sliding bracket 340 slidably connected to the base bracket 160 and a housing 350 connected to the sliding bracket 340. The housing 350 is connected and fixed with the sliding bracket 340 by rivets, for example. Referring to FIG. 24, one of the base bracket 160 and the sliding bracket 340 is provided with a sliding groove 341, and the other of the base bracket 160 and the sliding bracket 340 is provided with a sliding rod 161 matched with the sliding groove 341. In this embodiment, the sliding bracket 340 is provided with a sliding groove 341, and the base bracket 160 is provided with a sliding rod 161; however, positions of the sliding groove 341 and the sliding rod 161 may be interchangeable. Two sliding rods 161 and two sliding grooves 341 may be symmetrically disposed. In this embodiment, specifically, the sliding groove 341 is provided on the sliding bracket 340, and the sliding rod 161 is provided on the base bracket 160 and passes through the sliding groove 341. It could be understood that the above structures of the base bracket 160, the sliding bracket 340, the sliding groove 341 and the sliding rod 161 may be applied to other embodiments.

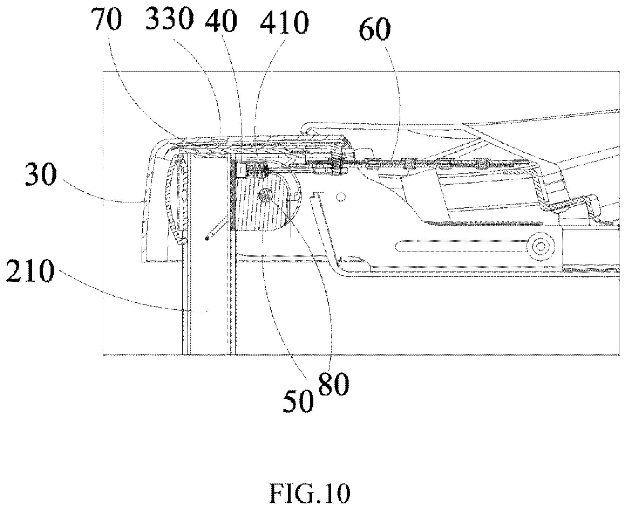

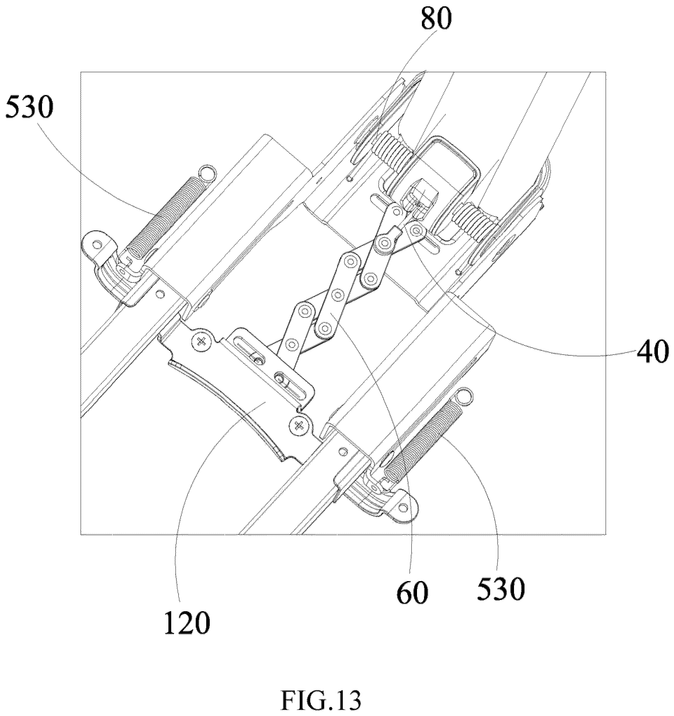

A protective cover 250 is provided in the housing 350. The pivot shaft 80 (referring to FIGS. 10 and 13) passes through the sliding bracket 340, the connecting element 240 for fixedly connecting the protective cover 250 and the supporting leg 20, and the driving element 50 so as to realize pivoting. The protective cover 250 may pivot together with the supporting leg 20 to block a gap generated after the supporting leg 20 is folded and prevent from injury.

The first restoring element 520 (for example, a torsion spring) may be disposed on or near the driving element 50, and constantly bias the supporting leg 20 to the unfolded state. In this way, the first restoring element 520 may assist the supporting leg 20 to be unfolded. A second restoring element 530 (for example, a tension spring) may be provided in the base 10. One end of the second restoring element 530 is connected with the sliding bracket 340, and the other end of the second restoring element 530 is connected with the base 10. The second restoring element 530 automatically extends the supporting leg 20 and the sliding element 30 to the front of the base assembly 1. The first restoring element 520 and the second restoring element 530 are optional, but not necessary. The number of the second restoring elements 530 may be one, two or more, which is not limited in the present disclosure. The first restoring element 520 may be an elastic restoring element other than a torsion spring. The second restoring element 530 may be an elastic restoring element other than a tension spring.

Referring to FIGS. 7-9, the base 10 further includes an accommodating groove 170. When the supporting leg 20 is folded, it may be accommodated in the accommodation groove 170, so that the supporting leg 20 in the folded state does not protrude from the bottom surface of the base 10, or slightly protrudes from the bottom surface of the base 10. The base 10 may further include a locking element 180. The locking element 180 may be in the form of a push button, which is movably disposed on a lower surface of the base 10, and is engaged to lock one end of the supporting leg 20 folded in the accommodating groove 170. The locking element 632 may prevent the supporting leg 20 from being accidentally rotated to the unfolded position.

The child safety seat has a first use mode, in which the sliding element 30 extends out and the supporting leg 20 is unfolded to form a ground contact support, and a second use mode, in which the sliding element 30 is retracted and the supporting leg 20 is folded to the bottom of the base 10.

A second embodiment of the present disclosure will be described below, in which the same parts as those of the first embodiment will be omitted.

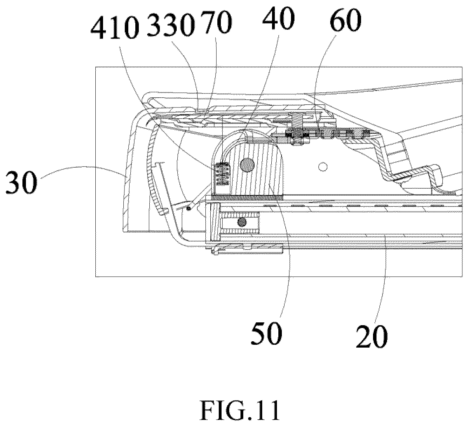

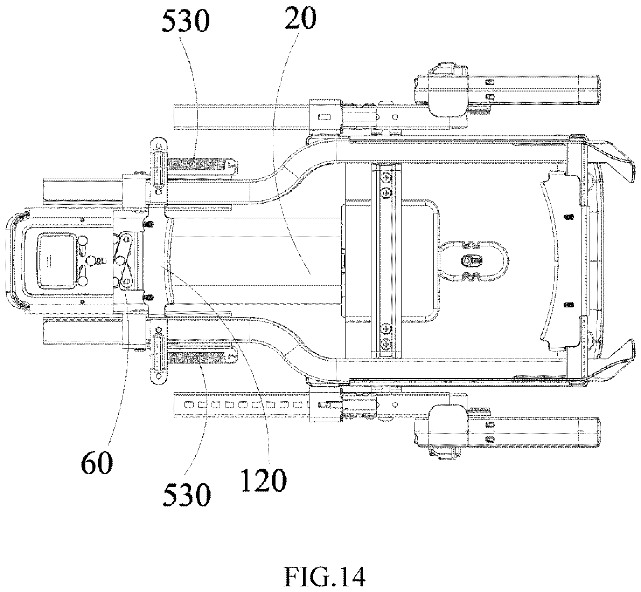

Referring to FIGS. 10-14, the base assembly 1 further includes a stroke enlarging mechanism 60. A first end of the stroke enlarging mechanism 60 is connected with the base 10, and a second end of the stroke enlarging mechanism 60 is connected with the supporting leg 20 through the traction element 40. The first end of the stroke enlarging mechanism 60 is connected and fixed with the fixing frame 120 by a second fastener. The stroke enlarging mechanism 60 may be a rhombic telescopic frame. A buffer elastic element 410 may be provided at a connection between the traction element 40 and the supporting leg 20, so as to prevent the structure of the supporting leg from being damaged by force when the supporting leg 20 is blocked during being folded.

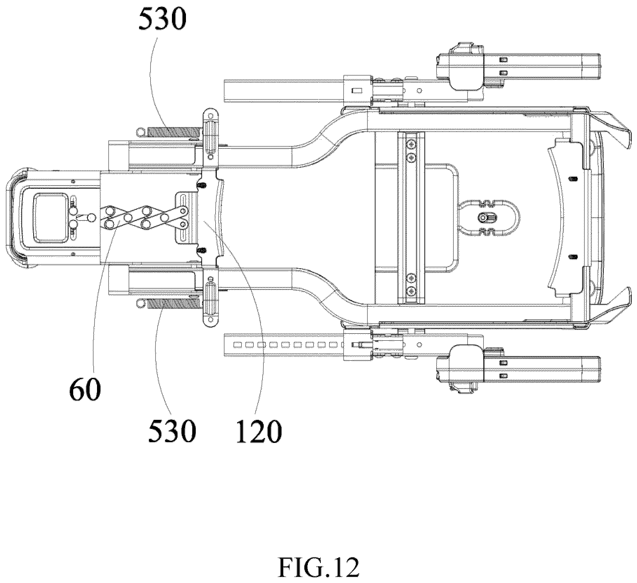

Referring to FIGS. 12-14, when the supporting leg 20 is pivoted and folded, the stroke enlarging mechanism 60 is driven and shortened with the rotation of the supporting leg 20 and the driving element 50, and the traction element 40 wraps around the driving element 50, which in turn causes the traction element 40 to pull the supporting leg 20 and the sliding element 30 to move into the base 10. This realizes that the supporting leg 20 is folded and retracted inward simultaneously, and the operation is convenient.

In this embodiment, the stroke enlarging mechanism 60 is provided to enlarge a distance with which one end of the traction element 40 is driven by the supporting leg 20, and drive the supporting leg 20 and the sliding element 30 to extend and retract together for a longer distance, so that the supporting leg 20 and the sliding element 30 retract in place without protruding to the front of the base 10 while the supporting leg 20 is pivoted to the accommodating groove 170, and vice versa.

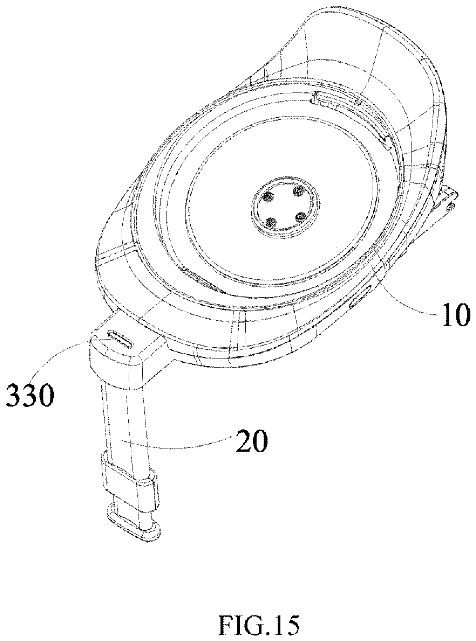

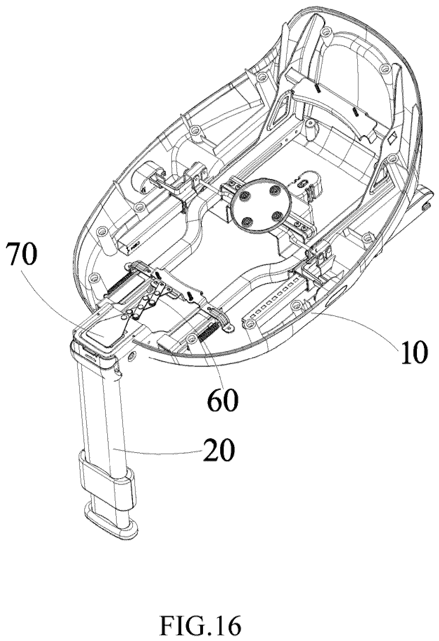

Referring to FIGS. 15 and 16, the base assembly 1 further includes a supporting leg indicator 70 linked with the second end of the stroke enlarging mechanism 60. The sliding element 30 is provided with an indication window 330 for at least partially exposing the supporting leg indicator 70. When the supporting leg 20 is unfolded and the sliding element 30 extends out from the front of the base 10, the supporting leg indicator 70 may indicate whether the supporting leg is in the unfolded state through the indication window 330, which may be achieved, for example, by displaying corresponding colors. With the supporting leg indicator 70, a state of the supporting leg 20 may be conveniently determined, thereby facilitating to be used; moreover, the supporting leg indicator 70 is driven by the stroke enlarging mechanism 60, and there is no need to additionally provide a driving element, so that the structure is simple. In addition, the stroke enlarging mechanism 60 is completely synchronized with the unfolding or folding of the supporting leg 20, so that the user may be more accurately prompted about the unfolding or folding state of the supporting leg 20.

Specifically, when the supporting leg 20 is unfolded, the stroke enlarging mechanism 60 drives the supporting leg 20 and the sliding element 30 to protrude towards the front of the base 10, and a color part (for example, a green part) of the supporting leg indicator 70 is aligned with the indication window 330, indicating that the supporting leg 20 is unfolded. When the supporting leg 20 is folded, another color part (for example, a red part) of the supporting leg indicator 70 is aligned with the indication window 330.

The second embodiment is mainly different from the first embodiment in that, one end of the traction element 40 is connected with the supporting leg 20, and the other end of the traction element 40 is connected with the base 10 through the stroke enlarging mechanism 60, so that the rotation of the supporting leg 20 may drive the supporting leg 20 to extend and retract for a longer distance, so as to meet better use requirements.

A third embodiment of the present disclosure will be described below, in which the same parts as those of the first embodiment will be omitted.

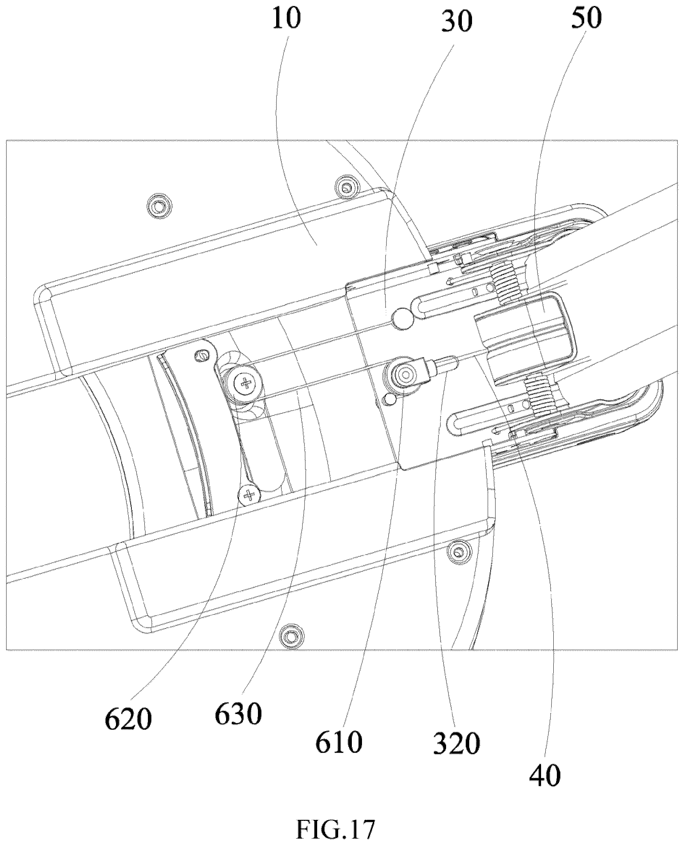

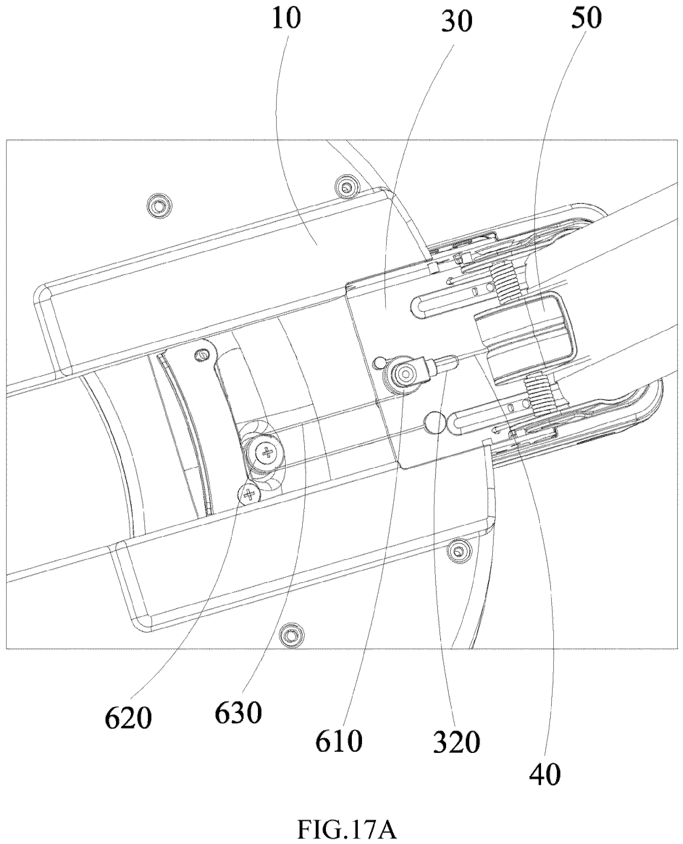

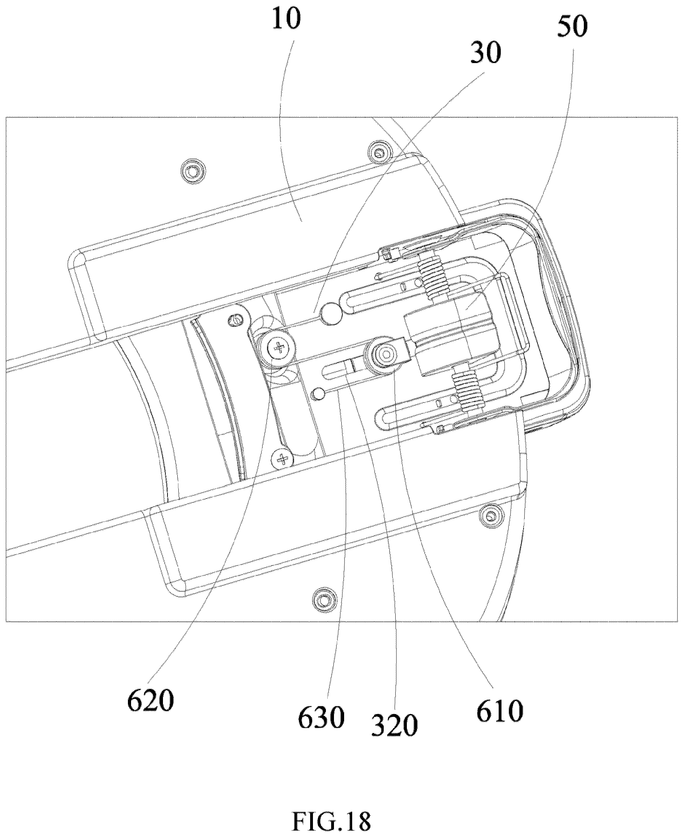

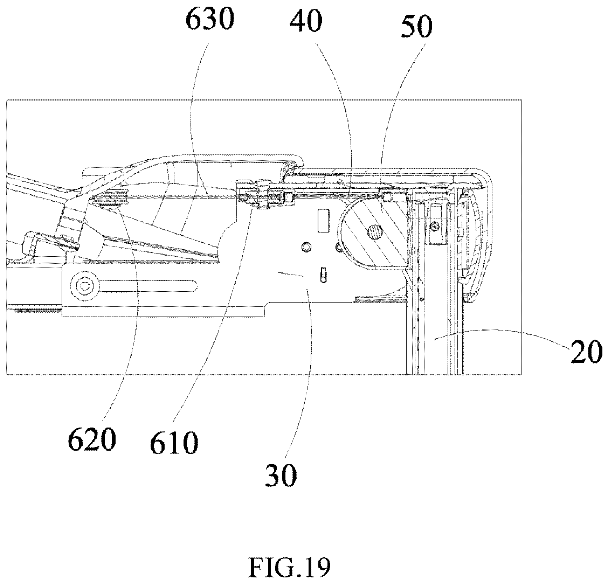

Referring to FIGS. 17-19, in this embodiment, the base assembly has a stroke enlarging mechanism 60. The stroke enlarging mechanism 60 is a pulley mechanism. The pulley mechanism includes a movable pulley 610 disposed on the sliding element 30, a fixed pulley 620 disposed on the base 10, and a linkage 630 connecting the movable pulley 610 and the fixed pulley 620. A first end of the traction element 40 is connected with the movable pulley 610, and a second end of the traction element 40 is connected with the supporting leg 20. The first end of the linkage 630 is fixed on the sliding element 30. The second end of the linkage 630 sequentially bypasses the movable pulley 610 and the fixed pulley 620, and then is fixed on the sliding element 30.

The sliding element 30 is provided with a sliding groove 320. The movable pulley 610 is movably disposed in the sliding groove 320. Referring to FIG. 17, the fixed pulley 620 is located on a left side of the movable pulley 610. Of course, referring to FIG. 17A, the fixed pulley 620 may also be located on a right side of the movable pulley 610, and a fixed position of the first end and a fixed position of the second end of the linkage 630 may be adjusted accordingly.

When the supporting leg 20 is folded, the traction element 40 wraps around the driving element 50 and pulls the supporting leg 20 and the sliding element 30 to move into the base 10 with rotation of the supporting leg 20 and the driving element 50. This realizes that the supporting leg 20 is retracted inward and folded synchronously. In this process, as the traction element 40 pulls the movable pulley 610, the linkage 630 pulls the supporting leg 20 and the sliding element 30 towards the base 10, so that the sliding element 30 is retracted into the base 10.

A fourth embodiment of the present disclosure will be described below, in which the same parts as those of the first embodiment will be omitted.

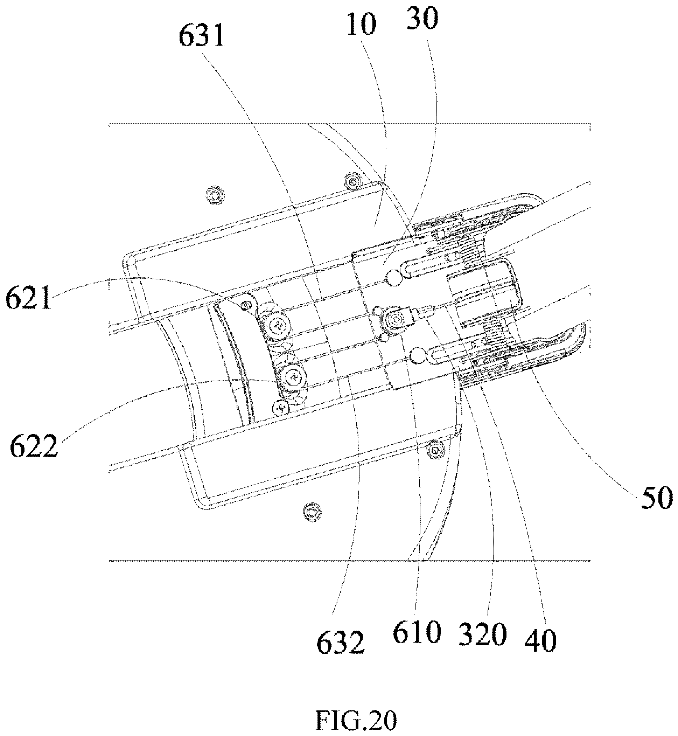

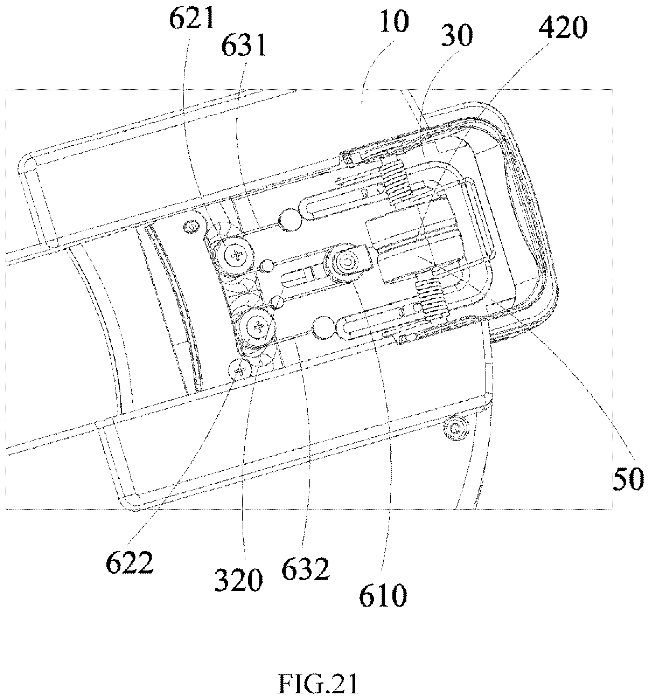

Referring to FIGS. 20 and 21, the base assembly has a stroke enlarging mechanism 60. The stroke enlarging mechanism 60 is a pulley mechanism. The pulley mechanism includes a movable pulley 610 disposed on the sliding element 30, a fixed pulley 620 disposed on the base 10, and a linkage 630 connecting the movable pulley 610 and the fixed pulley 620. The fixed pulley 620 includes a first fixed pulley 621 and a second fixed pulley 622 which are symmetrically disposed, and the linkage 630 may include a first linkage 631 and a second linkage 632 which are symmetrically disposed. A first end of the first linkage 631 is fixed on the sliding element 30, a second end of the first linkage 631 passes through the movable pulley 610 and the first fixed pulley 621 and is fixed on the sliding element 30, the first end of the second linkage 632 is fixed on the sliding element 30, and the second end of the second linkage 632 passes through the movable pulley 610 and the second fixed pulley 622 and is fixed on the sliding element 30.

The sliding element 30 may be provided with a sliding groove 320. The movable pulley 610 is movably disposed in the sliding groove 320.

When the supporting leg 20 is folded, the traction element 40 wraps around the driving element 50 and pulls the supporting leg 20 and the sliding element 30 to move into the base 10 with the rotation of the supporting leg 20 and the driving element 50. This realizes that the supporting leg 20 is retracted inward and folded synchronously. In this process, as the traction element 40 pulls the movable pulley 610, the linkage 630 pulls the supporting leg 20 and the sliding element 30 towards the base 10, so that the sliding element 30 is retracted into the base 10. A first end of the traction element 40 is connected with the movable pulley, and a second end of the traction element 40 is connected with the supporting leg 20. The driving element 50 is formed with a traction element limit groove 420 for limiting the traction element 40.

A fifth embodiment of the present disclosure will be described below, in which the same parts as those of the first embodiment will be omitted.

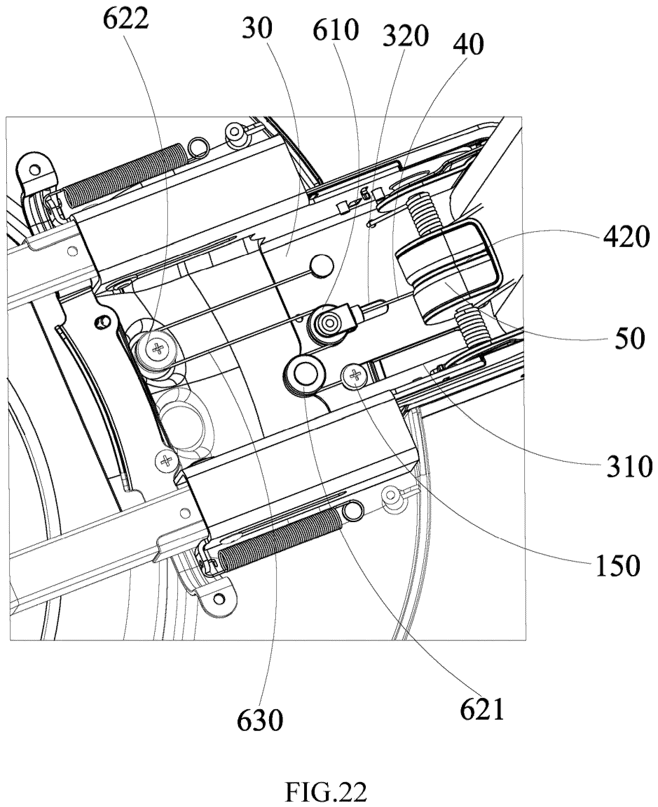

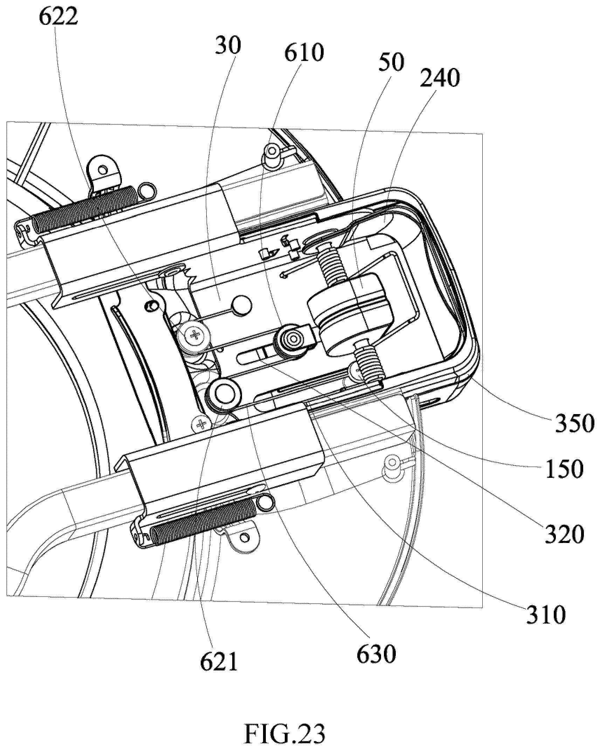

Referring to FIGS. 22-24, the base assembly has a stroke enlarging mechanism 60. The stroke enlarging mechanism 60 is a pulley mechanism. The pulley mechanism includes a movable pulley 610 and a first fixed pulley 621 disposed on the sliding element 30, a second fixed pulley 622 disposed on the base 10, and a linkage 630 connecting the first fixed pulley 621, the movable pulley 610 and the second fixed pulley 622. A first end of the traction element 40 is connected with the movable pulley 610, and a second end of the traction element 40 is connected with the supporting leg 20.

The base 10 is provided with a positioning column 150. The sliding element 30 is provided with an avoidance groove 310 to avoid the positioning column 150. A first end of the linkage 630 is fixed on the positioning column 150, and a second end of the linkage 630 sequentially passes through the first fixed pulley 621, the movable pulley 610 and the second fixed pulley 622 and is fixed on the sliding element 30.

The sliding element 30 includes a sliding bracket 340 slidably connected to the base bracket 160 and a housing 350 connected with the sliding bracket 340. For example, the housing 350 is connected and fixed with the sliding bracket 340 by rivets. One of the base bracket 160 and the sliding bracket 340 is provided with a sliding groove 341, and the other of the base bracket 160 and the sliding bracket 340 is provided with a sliding rod 161 matched with the sliding groove 341. In this embodiment, the sliding bracket 340 is provided with a sliding groove 341, and the base bracket 160 is provided with a sliding rod 161; however, positions of the sliding groove 341 and the sliding rod 161 may be interchangeable. In this embodiment, specifically, the sliding groove 341 is disposed on the sliding bracket 340, and the sliding rod 161 is disposed on the base bracket 160 and passes through the sliding groove 341. It can be understood that the above structures of the base bracket 160, the sliding bracket 340, the sliding groove 341 and the sliding rod 161 may be applied to any of the other embodiments described above.

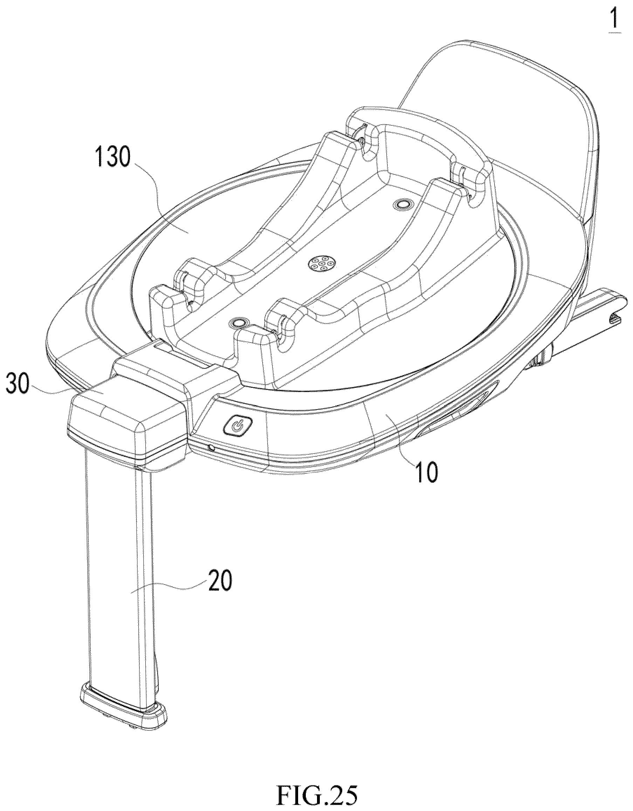

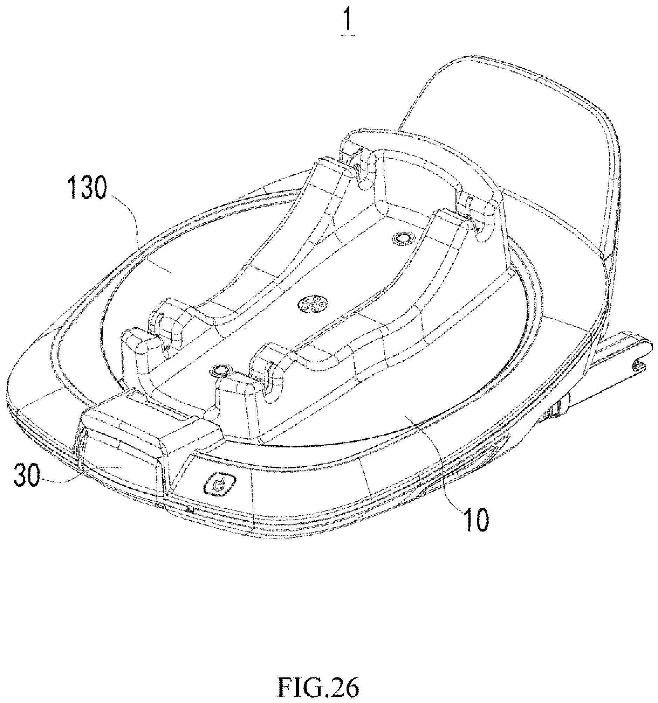

FIG. 25 is a perspective view of a base assembly of the present disclosure, in which a supporting leg of a base assembly is in an unfolded position, and FIG. 26 is a perspective view of the base assembly of the present disclosure, in which the supporting leg of the base assembly is in a folded position.

Referring to FIGS. 25-26, the child safety seat may have a base assembly 1 and a seat (not shown). The base assembly 1 may have a base 10, a supporting leg 20 and a sliding element 30. The base 10 may have a turntable 130. The turntable 130 is detachably disposed on an upper surface of the base 10 and is rotatable relative to other parts of the base 10. The seat may be provided on the turntable 130 of the base 10 and thus may rotate together with the turntable 130. The seat at least has a forward position and a backward position. The forward position may be that the seat faces the front of the vehicle, and the backward position may be that the seat faces the rear of the vehicle. The forward position may be applied to an older child, for example, and the backward position may be applied to a younger child, for example. However, the present disclosure is not limited thereto.

The sliding element 30 is telescopically disposed on the base 10, and the supporting leg 20 may be pivotally connected to the sliding element 30 and extends and retracts together with the sliding element 30. The supporting leg 20 is rotatable via the sliding element 30 and is telescopically connected to the base 10. When the supporting leg 20 is used, the sliding element 30 extends out of the base 10 while the supporting leg 20 are pivotally unfolded for contacting with the ground (i.e., the floor in a cabin of the vehicle), so that the child safety seat may be prevented from overturning during the impact. When the supporting leg 20 are not needed, the sliding element 30 is retracted into the base 10 while the supporting leg 20 are pivotally folded, so that the overall size of the child safety seat may be reduced, and it is convenient to store and use.

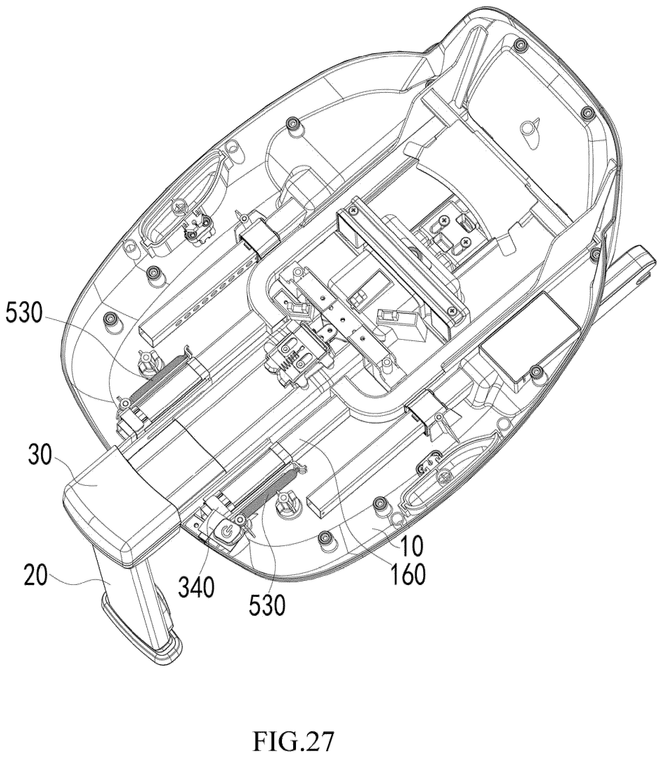

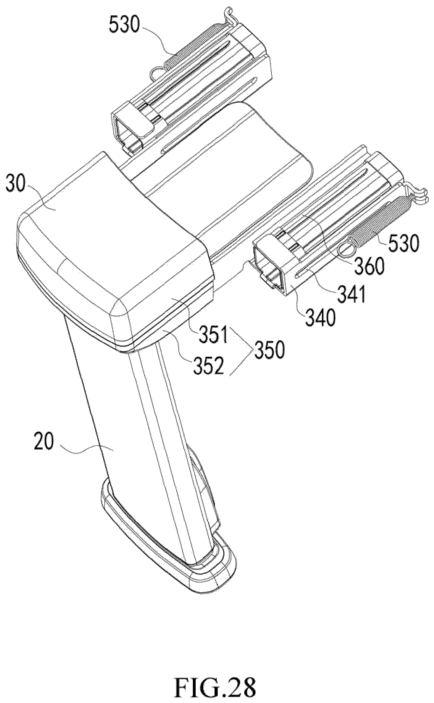

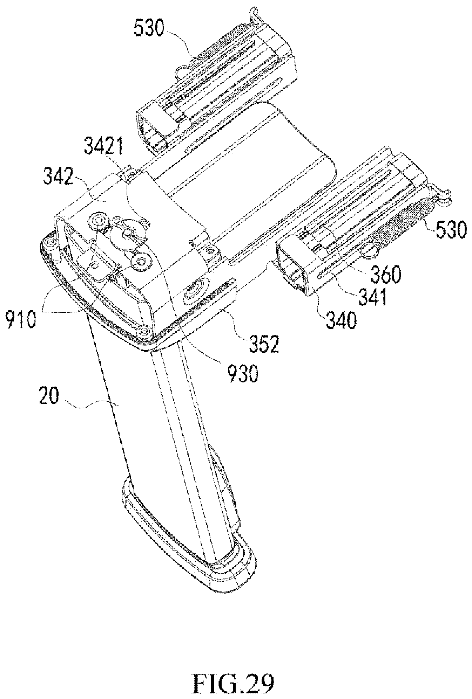

FIG. 27 is a perspective view of the base assembly of the present disclosure, in which the supporting leg of the base assembly is in the unfolded position, and some of components of the base assembly are removed to show an internal structure of the base assembly; FIG. 28 is a perspective view of some of the components of the base assembly of the present disclosure; and FIG. 29 is a perspective view of some of the components of the base assembly of the present disclosure, in which an upper housing is removed compared with FIG. 28.

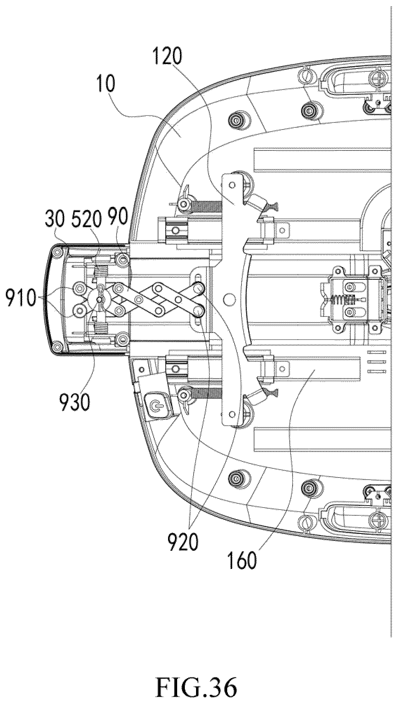

The base 10 may have a fixing frame 120 (referring to FIG. 36) and a base bracket 160 therein. The fixing frame 120 and the base bracket 160 may be used as a carrier. The base bracket 160 is a tube, for example. The fixing frame 120 may extend along a transverse direction of the base 10, and span the base bracket 160 from above. The base bracket 160 has a symmetrical structure, however, the present disclosure is not limited thereto.

The sliding element 30 includes a sliding bracket 340 slidably sleeved to the base bracket 160 and a housing 350 connected to the sliding bracket 340. The sliding element 30 also includes a bushing 360 disposed between the base bracket 160 and the sliding bracket 340 to prevent the sliding bracket 340 from sliding directly on the base bracket 160. The bushing 360 is configured to reduce a friction force between the base bracket 160 and the sliding bracket 340, so that the sliding bracket 340 can smoothly slide relative to the base bracket 160.

The housing 350 may be composed of an upper housing 351 and a lower housing 352, however, the present disclosure is not limited thereto. The sliding bracket 340 includes a supporting leg bracket 342 extending into the housing 350. The housing 350 is fixed to the supporting leg bracket 342 of the sliding bracket 340 (e.g., by rivets). The sliding bracket 340 is provided with a sliding slot 341, and the base bracket 160 is provided with a sliding rod (not shown). Alternatively, the sliding bracket 340 is provided with a sliding rod, and the base bracket 160 is provided with a sliding slot 341. There may be two sliding rods 161 and two sliding slots 341 symmetrically disposed.

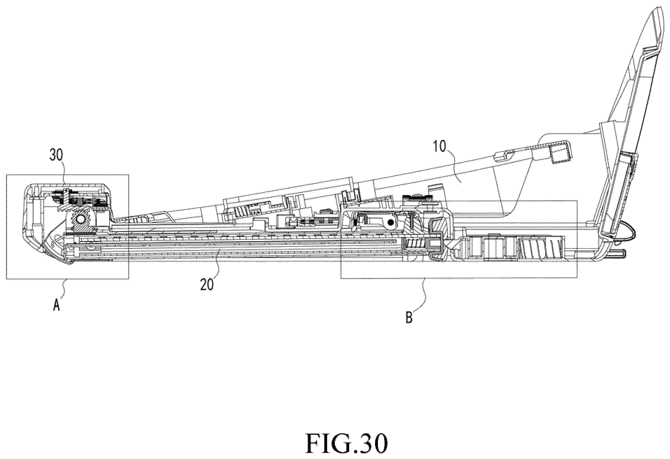

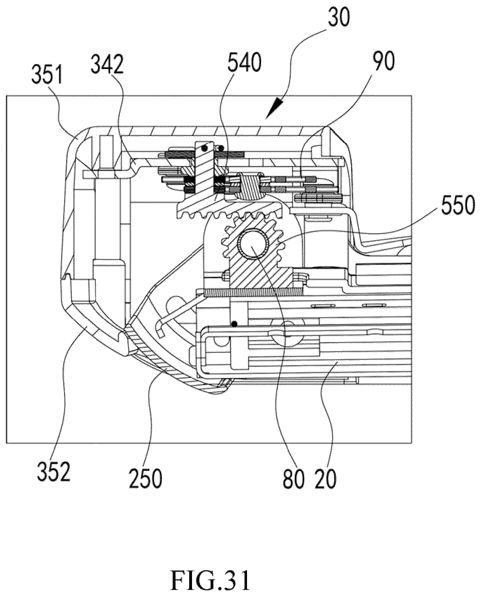

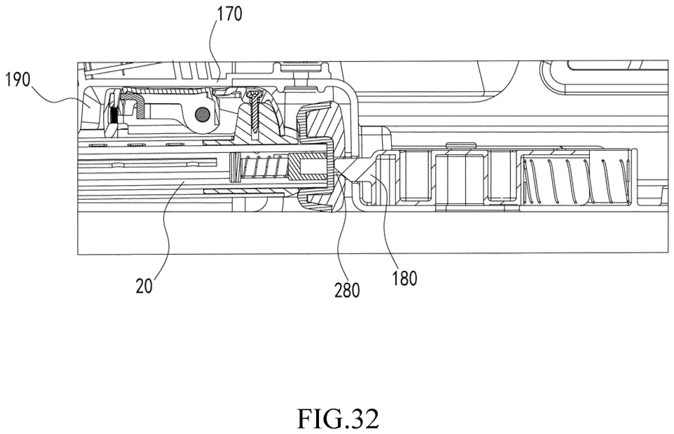

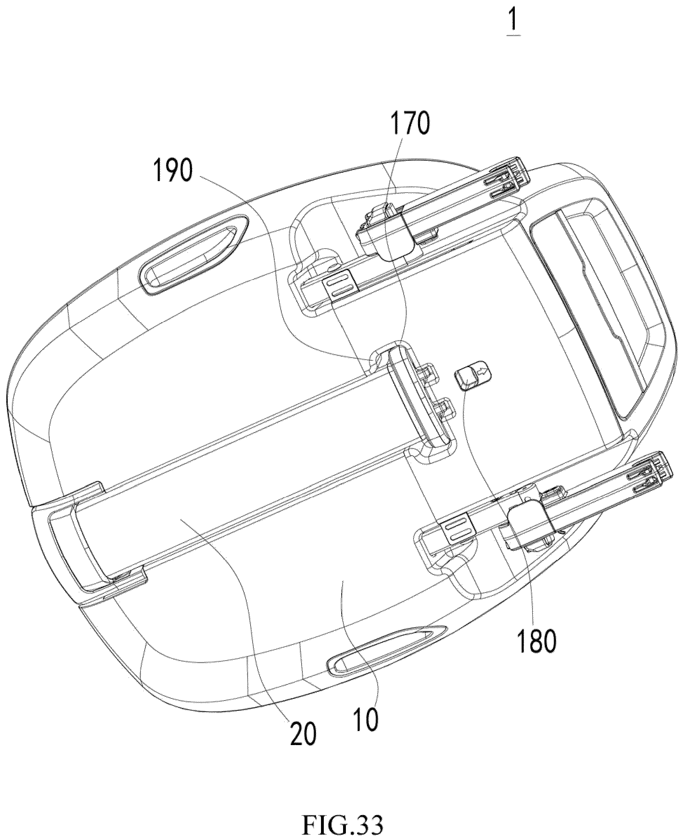

FIG. 30 is a side cross-sectional view of the base assembly of the present disclosure, in which the supporting leg of the base assembly are in a folded position; FIG. 31 is a partial enlarged view of a part A of FIG. 30; FIG. 32 is a partial enlarged view of a part B of FIG. 30; and FIG. 33 is a bottom perspective view of the base assembly of the present disclosure, in which the supporting leg of the base assembly is in the folded position.

The supporting leg 20 is provided with a gear 550, the sliding element 30 is provided with a rack 540, and the gear 550 is engaged with the rack 540, so that movement of the sliding element 30 to an extended position is linked with pivoting of the supporting leg 20 to an unfolded position, and movement of the sliding element 30 to a retracted position is associated with pivoting of the supporting leg 20 to a folded position.

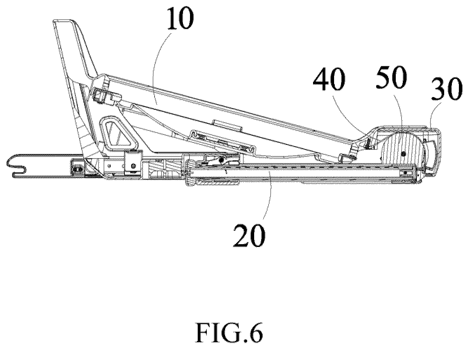

The extended position may refer to a position where the sliding element 30 protrudes from the base 10 forwardly (a leftward direction in FIG. 6), and the retracted position may refer to a position where the sliding element 30 does not protrude or substantially not protrude from the base 10 backwardly (a rightward direction in FIG. 6).

The unfolded position may refer to a position where the supporting leg 20 is pivoted to be perpendicular or substantially perpendicular to the bottom surface of the base 10, and the folded position may refer to a position where the supporting leg 20 is pivoted to be not protrude, or substantially not protrude from the bottom surface of the base 10.

A protective cover 250 is provided in the housing 350. The pivot shaft 80 passes through the sliding bracket 340, the protective cover 250 and the gear 550 so as to realize pivoting. The protective cover 250 may pivot together with the supporting leg 20 to block a gap generated after the supporting leg 20 is folded and prevent from injury.

The base assembly 1 may include a first restoring element 520 (see FIG. 36). The first restoring element 520 (e.g., a torsion spring) is provided on the pivot shaft 80. The first restoring element 520 is configured to constantly bias the supporting leg 20 towards the unfolded position. In this way, the first restoring element 520 may assist the supporting leg 20 to be unfolded. The base assembly 1 may include a second restoring element 530. The second restoring element 530 (e.g., a tension spring) may be provided in the base 10. One end of the second restoring element 530 is fixed to the base 10, and the other end of the second restoring element 530 is fixed to the sliding element 30. The second restoring element 530 is configured to constantly bias the sliding element 30 towards the extended position. That is, the second restoring element 530 automatically extends the supporting leg 20 and the sliding element 30 to the front of the base assembly 1. The first restoring element 520 and the second restoring element 530 are optional, but not necessary. The number of the second restoring elements 530 may be one, two or more, which is not limited in the present disclosure. The first restoring element 520 may be an elastic restoring element other than a torsion spring. The second restoring element 530 may be an elastic restoring element other than a tension spring.

Referring to FIGS. 32-33, the base 10 further includes an accommodating groove 170. When the supporting leg 20 is folded, it may be accommodated in the accommodation groove 170, so that the supporting leg 20 in the folded state does not protrude from the bottom surface of the base 10, or slightly protrudes from the bottom surface of the base 10. The base 10 may further include a locking element 180. The locking element 180 may be in the form of a push button, which is movably disposed on a bottom surface of the base 10, for example, moves along a longitudinal direction of the base assembly 1 (along a left-right direction as shown in FIG. 32), and is engaged to lock a locking hole 280 of the supporting leg 20 folded in the accommodating groove 170. The locking element 180 may prevent the supporting leg 20 from being accidentally rotated to the unfolded position.

The base 10 further includes a stepped portion 190. The stepped portion 190 is formed as a side wall of the accommodating groove 170. The stepped portion 190 prevents the sliding element 30 from moving to the extended position by abutting against the supporting leg 20 when the supporting leg 20 is in the folded position.

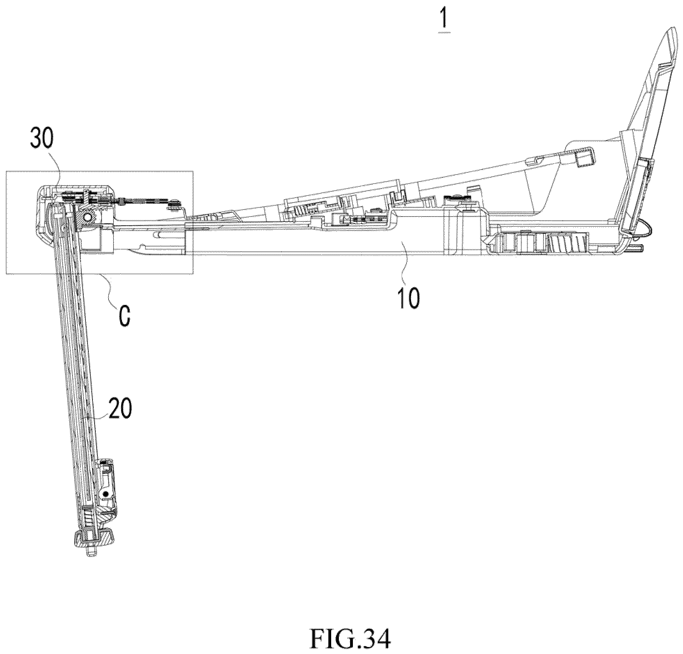

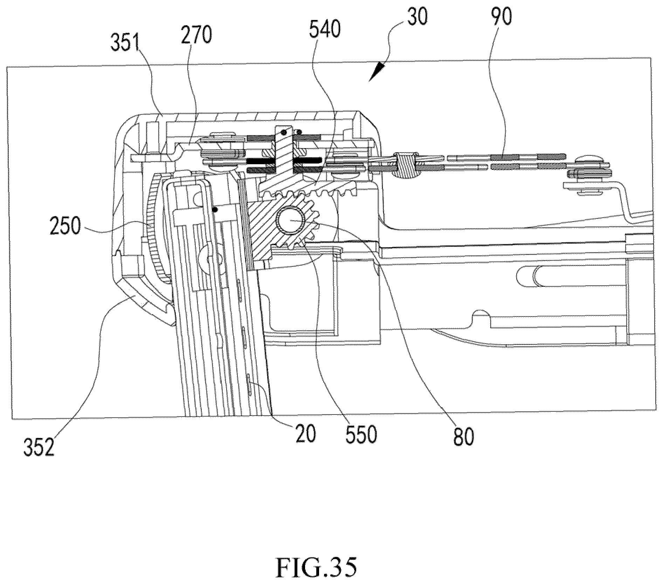

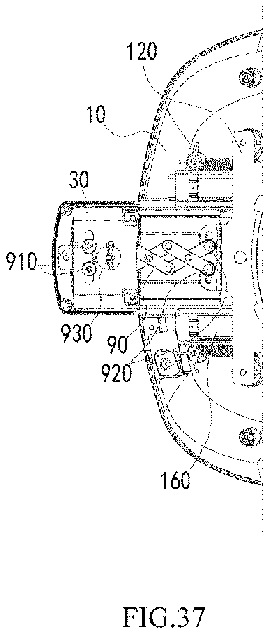

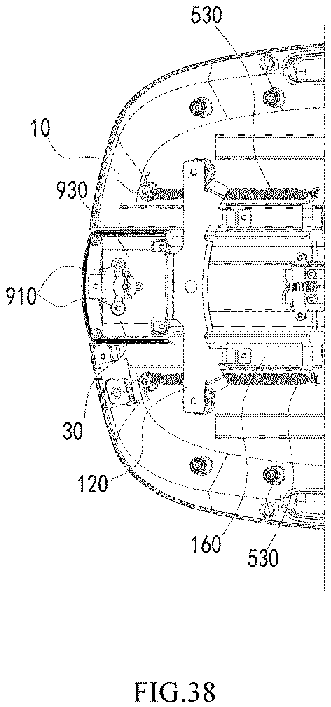

FIG. 34 is a side cross-sectional view of the base assembly of the present disclosure, in which the supporting leg of the base assembly is near an unfolded position; FIG. 35 is a partial enlarged view of a part C of FIG. 34; FIG. 36 is a partial top view of the base assembly of the present disclosure, in which the sliding element of the base assembly is in an extended position and some of components of the base assembly are removed to show the internal structure of the base assembly; FIG. 37 is a partial top view of the base assembly of the present disclosure, in which the sliding element of the base assembly is in the extended position and some of components of the base assembly are removed to show the internal structure of the base assembly; and FIG. 38 is a partial top view of the base assembly of the present disclosure, in which the sliding element of the base assembly is in a retracted position and some of components of the base assembly are removed to show the internal structure of the base assembly.

The base assembly 1 also includes a conversion structure 90 having a first end 910 (a left end as shown in FIG. 35) connected to the sliding element 30 and a second end 920 (a right end as shown in FIG. 35) connected to the base 10. Specifically, the first end 910 of the conversion structure 90 is connected to the supporting leg bracket 342 and the second end 920 of the conversion structure 90 is connected to the fixing bracket 120. The second end 920 (the right end as shown in FIG. 35) of the conversion structure 90 is connected to the base 10. The rack 540 is fixed to the conversion structure 90. Specifically, the rack 540 is fixed at a position (i.e., a connecting portion 930) between the first end 910 and the second end 920. The conversion structure 90 is correspondingly elongated or shortened in response to increasing or decreasing of a distance between the sliding element 30 and the base 10.

The conversion structure 90 may be formed by at least one X-shaped unit (as clearly shown in FIG. 36). In the case where the conversion structure 90 is formed by a plurality of X-type units, the plurality of X-type units are sequentially connected respectively. Each of the X-shaped units may be formed by two sheets pivotally connected to each other. The two sheets of each of the X-shaped units is pivoted to each other by means of a pivot shaft. The sheet as mentioned above may be an iron sheet, and the present disclosure is not limited thereto. As an example, the conversion structure 90 is formed by three X-shaped units, and the rack 540 is fixed at a pivot shaft of one of the X-shaped units on the left (as shown in FIG. 36).

The supporting leg bracket 342 and the fixing frame 120 may be respectively formed with two elongated holes. The first end 910 (including ends of two sheets of one X-shaped unit) of the conversion structure 90 are respectively coupled to the two elongated holes of the supporting leg bracket 342. The second end 920 (including ends of the two sheets of one X-shaped unit) of the conversion structure 90 are respectively coupled to the two elongated holes of the fixing frame 120.

Each of the elongated holes on the supporting leg bracket 342 is configured to prevent the first end 910 of the conversion structure 90 from moving relative to the supporting leg bracket 342 along the longitudinal direction of the base assembly 1 (the left-right direction as shown in FIG. 36) and to allow the first end 910 of the conversion structure 90 to move a certain distance relative to the supporting leg bracket 342 of the base assembly 1 along the transverse direction of the base assembly 1 (an up-down direction as shown in FIG. 36).

Each of the elongated holes on the fixing frame 120 is configured to prevent the second end 920 of the conversion structure 90 from moving relative to the fixing frame 120 along the longitudinal direction of the base assembly 1 (the left-right direction as shown in FIG. 36), and allow the second end 920 of the conversion structure 90 to move a certain distance relative to the fixing frame 120 along the transverse direction of the base assembly 1 (the up-down direction as shown in FIG. 36).

Referring to FIG. 29, a sliding slot 3421 may be formed in the supporting leg bracket 342. A part of the connecting portion 930 is located in the sliding slot 3421. The sliding slot 3421 prevents the connecting portion 930 from moving in the transverse direction (the up-down direction as shown in FIG. 36), and allow the connecting portion 930 to move a certain distance along the longitudinal direction (the left-right direction as shown in FIG. 36).

The specific operation process of the base assembly 1 will be described below.

The locking element 180 is firstly unlocked when the supporting leg 20 needs to be used. For example, the locking element 180 may be unlocked by pressing or pushing the locking element 180 in a rearward direction (the rightward direction as shown in FIG. 32). Then, since the supporting leg 20 is not locked by the locking element 180, the supporting leg 20 is pivoted towards the unfolded position under the action of the first restoring element 520 and moves out of the accommodating groove 170. Further, since the supporting leg 20 moves out of the accommodating groove 170, the stepped portion 190 no longer abuts against the supporting leg 20. At this time, the sliding element 30 moves towards the extended position under the action of the second restoring element 530. As an example, the rack 540 and the gear 550 may be configured to start engaging with each other when the stepped portion 190 no longer abuts against the supporting leg 20, and the supporting leg 20, and the sliding element 30 start to move synchronously, however, the present disclosure is not limited thereto. Then, the rack 540 moves relative to the gear 550 during the pivoting of the supporting leg 20 towards the unfolded position and the movement of the sliding element 30 towards the extended position. A moving distance of the rack 540 relative to the gear 550 and a moving distance of the sliding element 30 relative to the base 10 will conform to a specific proportional relationship therebetween (which will be described in detail below). Finally, when the supporting leg 20 is pivoted to the unfolded position and the sliding element 30 is moved to the extended position, the supporting leg 20 stops further pivoting and the sliding element 30 stops further moving. The "stop" as mentioned above can be achieved, for example, by preventing further movement of the connecting portion 930 by the sliding slot 3421, or by preventing the first end 910 and/or the second end 920 of the conversion structure 90 from moving further by the elongated holes on the supporting leg bracket 342 and/or the fixing frame 120, or by a combination of processes as mentioned above.

When the supporting leg 20 is not needed, the operator may push the supporting leg 20 to pivot in a direction towards the folding position, the pivoting of the supporting leg 20 drives the gear 550 to rotate, and then the rotation of the gear 550 drives the rack 540 to move. Since the conversion structure 90 is fixedly connected to the rack 540, the movement of the rack 540 enables the conversion structure 90 to be shortened; and since the first end 910 of the conversion structure 90 is connected to the supporting leg bracket 342, the shortening of the conversion structure 90 drives the sliding element 30 to move towards the retracted position. The conversion structure 90 may enlarge the moving distance of the sliding element 30 and the supporting leg 20. When the supporting leg 20 is pivoted into the accommodating slot 170, the supporting leg 20 will trigger the locking element 180 to lock the supporting leg 20 to prevent the supporting leg 20 from being unfolded when the operator releases the supporting leg 20. At the same time, the stepped portion 190 also abuts against the supporting leg 20 to prevent the sliding element 30 from protruding when the operator releases the supporting leg 20.

The conversion structure 90 is elongated or shortened when the sliding element 30 moves relative to the base 10. Taking a situation shown in FIG. 36 as an example, the conversion structure 90 has three X-shaped units, and the rack 550 is fixed at the pivot shaft of the leftmost X-shaped unit. In this way, when the sliding element 30 moves a distance Lrelative to the base 10 along a direction away from the base 10, the conversion structure 90 is correspondingly elongated by the distance L. At this time, since the position where the rack 550 is fixed has only a distance corresponding to 2.5 X-shaped units away from the base 10, the rack 550 moves away from the base 10 by a distance of 5/6L. Since the gear 540 is connected to the sliding element 30 via the pivot shaft 80, the gear 540 moves a distance L relative to the base 10 in a direction away from the base 10. That is, the gear 540 moves by a distance of 1/6L relative to the rack 550 in a direction away from the base 10. During the pivoting process of the supporting leg 20, the pivoting of the supporting leg 20 may cause the sliding element 30 to move since the gear 540 moves relative to the rack 550, and vice versa.

It should be noted that the proportional relationship as mentioned above is only exemplary, and the proportional relationship between the moving distance of the rack 540 relative to the gear 550 and the moving distance of the sliding element 30 relative to the base 10 can be adjusted as required. This can also be achieved, for example, by changing the position where the rack 550 is fixed on the conversion structure 90. In addition, the above-mentioned proportional relationship can also be changed in other ways.

The child safety seat has a first use mode, in which the sliding element 30 extends out and the supporting leg 20 is unfolded to form a ground contact support, and a second use mode, in which the sliding element 30 is retracted and the supporting leg 20 is folded to the bottom of the base 10.

With the above-mentioned technical solutions, the embodiments of the present disclosure have the following advantages (Note that the different embodiments can be combined with each other):
1. In the embodiments, the supporting leg is provided to at least have an unfolded position and a folded position, so that when the child safety seat is used, the child safety seat can be well supported by the supporting leg to prevent the child safety seat from overturning, and when it is not in use, the supporting leg may be folded at the bottom of the base to accommodate the supporting leg conveniently, and a volume of the child safety seat can be reduced to decrease the transportation cost. Also, in the embodiments of the present disclosure, the sliding element is telescopically disposed on the base, and the supporting leg is pivotally connected to the sliding element and extends and retracts with the sliding element, so that the supporting leg may be conveniently installed, pivoted well, and may also extend and retract with the extending and retracting of the sliding element. In this way, when the supporting leg is not in use, the sliding element may retract into the bottom of the base to minimize or even eliminate protruding of the sliding element from the front end of the base, thereby prevent interference with feet of the child and improving the riding experience of the child, further reducing the volume of the child safety seat to further decrease the transportation cost. Moreover, due to the traction element, when the supporting leg is pivoted and folded, the traction element may be tightened to form an inward reaction force, so that the supporting leg may synchronously retract inward, that is, in a direction close to the base, and then it is not necessary to push the supporting leg to retract after the supporting leg is folded, thereby simplifying the operation of the user. Thus, the embodiments of the present disclosure have advantages of simple operation, good user experience and high satisfaction degree, and provides differentiation from existing products and greatly enhances the market competitiveness of products.
2. The traction element is provided as a flexible element, and thus has a certain flexibility and deflection, which is convenient for rolling deformation of the traction element, so that the supporting leg may well retract inward during folding, so as to ensure the retraction effect of the supporting leg, and thus the retraction effect of the sliding element; moreover, when the supporting leg is folded, the operation is simple and effortless, and the user experience is greatly improved.
3. The flexible element is provided as a steel wire, in this way, the strength of the traction element can be well ensured to avoid from being broken when tensioned, the durability can be improved, and good flexibility and bending deflection can be ensured, so that when the supporting leg is pivoted and folded, a good inward reaction force may be formed, and the supporting leg may retract inward; alternatively, the flexible element may be provided as a cord or a webbing, so that the supporting leg may retract inward synchronously when the supporting leg is pivoted and folded, simplifying the operation of the user, and reducing the overall cost of the child safety seat due to the lower material cost of the cord or webbing.
4. The driving element is provided to be pivoted with the supporting leg, the traction element may form a better reaction force when the supporting leg is pivoted and folded, that is, the driving element may roll up the traction element to a certain extent, so that the supporting leg may be better pulled to retract inwards, and the supporting leg may be folded completely. In this way, the sliding element will not protrude too far from the front end of the base to affect the riding experience of the child, and the use experience of the child safety seat can be improved. In addition, the volume of the child safety seat can be reduced during transportation, so as to reduce the transportation cost.
5. The driving element is provided on the supporting leg, which is convenient for the driving element to pivot with the supporting leg, and the driving element is integrally formed with the supporting leg and formed as a part of the supporting leg, which ensures the strength and durability of the driving element and prolongs its service life; alternatively, the driving element and the supporting leg are separated structure and fixedly connected by a fixing structure, so that it is convenient to set the structure and position of the driving element, and the structural design is more flexible without being limited by the structure and position of the driving element.
6. The driving element is located at an upper end of the supporting leg, so that the supporting leg may be retracted by being pivoted with a small angle when the supporting leg is pivoted and folded, which not only saves the force when the supporting leg is pivoted and folded, but also reduces the length of the traction element to reduce the material cost, thus reducing the overall production cost.
7. The driving element is shaped as a boss, and the driving element is provided with an arc-shaped part matched with the traction element. In this way, when the supporting leg is pivoted and folded, the driving element may form a better rolling effect on the traction element, so that the traction element may form a larger inward reaction force to retract the supporting leg inward, ensuring the retraction effect of the supporting leg and thus the retraction effect of the sliding element; alternatively, the driving element may be shaped as a pulley or a column, so that the traction element may be rolled up well, i.e., applying a force to the traction element, and thus the traction element may generate enough reaction force to pull the supporting leg to retract with a good the retraction effect.
8. The first end of the traction element is fixedly connected with the base, and a second end of the linkage is fixedly connected with the driving element, so that one end of the traction element is fixedly disposed and the other end is movably disposed. In this way, the other end of the traction element is rolled up and tightened by the driving element when the supporting leg is pivoted, so that the traction element is stressed to ensure that when a force with which the driving element is pivoted outwards is applied on the traction element, a reaction force which pulls the supporting leg to retract inwards may be formed, thus ensuring that the supporting leg may retract synchronously when pivoting and folding, and the traction member is stable and reliable when the force is applied, and is not easy to be broken. In addition, the supporting leg may retract by pivoting the supporting leg with a small angle. Alternatively, a second end of the traction element may be directly fixed to the upper end of the supporting leg, so that the supporting leg directly drives the traction element when the supporting leg is pivoted and folded, and under the action of the driving element, the traction element is tightened to form a reaction force, so as to realize the synchronous inward retraction of the supporting leg when it is pivoted and folded.
9. The base is provided with a fixing column and the fixing column is matched with a fastener to fix the first end of the traction element with the base. This fixing method is simple, reliable and not easy to loosen, so as to ensure the effect of the traction element.
10. The stroke enlarging mechanism is provided and has a first end connected with the base and a second end connected with the supporting leg through a traction element, so that the traction element is driven when the supporting leg is pivoted and folded, and then the traction element drives the stroke enlarging mechanism, which in turn drives the supporting leg to retract inward, so as to synchronously retract inward when the supporting leg is folded. This is convenient to operate and also increase an inward retraction length of the supporting leg to meet better use requirements.
11. The rhombic telescopic frame is used, which not only has a good telescopic effect to ensure the retraction effect of the supporting leg, but also has a large telescopic change, that is, it may be stretched to a large length or retracted to a small length, thereby achieving a better stroke enlarging effect, and especially greatly enhancing the effect of retracting the supporting leg. In addition, its strength is sufficient, and it is not easy to deform or loosen when pulling the supporting leg; and its structure is simple, which is convenient for production and processing and whole machine assembly, and improves the production and assembly efficiency. Specifically, the rhombic telescopic frame is formed by connecting a plurality of rhombic structures, and the rhombic structures include a plurality of groups of two connecting rod assemblies hinged at the middle position, so as to ensure the effect of the rhombic telescopic frame and facilitate the production and assembly of the rhombic telescopic frame.
12. The fixing frame is provided to facilitate the fixing between the stroke enlarging mechanism and the base, and the fixing is reliable, so as to ensure the stability and reliability of the stroke enlarging mechanism when it stretches and retracts.
13. The pulley mechanism is provided so that the stroke is enlarged, the operation process is smooth, the resistance is small, the structure is reliable and the cost is low.
14. The movable pulley, the fixed pulley and the linkage are provided to enlarge the stroke and provide a simple and reliable structure.
15. The first end of the linkage is fixed on the sliding element, and the second end of the linkage bypasses the movable pulley and the fixed pulley in turn and is fixed on the sliding element, so that when the supporting leg is pivoted and folded to drive the traction element, and then the traction element drives the stroke enlarging mechanism, which in turn drives the supporting leg to retract inward, so as to synchronously retract inward when the supporting leg is folded, thereby facilitating to operate and increasing the inward retraction length of the supporting leg to meet better use requirements.
16. Two fixed pulley and two linkages are provided, so that the pulley mechanism can run more stably, and the supporting leg is evenly stressed when they are unfolded and folded, and at the same time, it has a greater stroke enlarging effect.
17. The first fixed pulley is provided on the sliding element, so that the pulley mechanism can run more stably, and at the same time, it has a greater stroke enlarging effect, and reduces the number of linkages used.
18. The positioning column and the avoidance groove are provided, so that the positioning column may move relative to the sliding element, ensuring the stability and reliability of the stroke enlarging mechanism during extending and retracting.
19. The sliding groove is provided for the movable pulley to slide, so that the movable pulley will not have unexpected displacement in the moving process, which ensures that the supporting leg retracts at a uniform speed when it is folded.
20. The supporting leg indicator and the indication window are provided, so that the state of the supporting leg can be conveniently determined, and it is more convenient for the user. Moreover, the supporting leg indicator is driven by the stroke enlarging mechanism, so that it is not necessary to additionally provide a driving element, and in this way, the structure is simple, and the stroke enlarging mechanism is completely synchronized with the unfolding or folding of the supporting leg, so that the user can be more accurately prompted about the unfolding or folding state of the supporting leg.
21. The buffer elastic element is provided to prevent the supporting leg from being damaged by force when the supporting leg is blocked during being folded.
22. The sliding groove and the sliding rod are provided, so that the sliding element may be retracted into the base when the supporting leg is folded, thereby further reducing the volume of the base assembly.
23. In the child safety seat of the embodiments of the present disclosure, the supporting leg is retracted inward synchronously by tightening the traction element to form an inward reaction force when the supporting leg is pivoted and folded, which is simple and convenient to operate and saves the volume.
24. The sliding element is provided and the supporting leg is pivotally connected to the sliding element, so that the supporting leg may be unfolded and folded with the extending and retracting of the sliding element, and the safety seat in both use modes has good safety when unfolded and small size when folded. In a first use mode, the seat faces backward and the supporting leg is unfolded, or the seat faces forward and the supporting leg is unfolded; and in a second use mode (BOOSTER mode), the seat faces forward and the supporting leg is folded. In the first use mode, the seat may be used backward with the supporting leg unfolded or forward with the supporting leg unfolded. More specifically, a mode that the seat faces backward with the supporting leg unfolded is suitable for a child who is younger than 15 months and/or whose height is between 0 and 105 cm, and a mode that the seat faces forward with the supporting leg unfolded is suitable for a child who is older than 15 months and/or whose height is between 76 cm and 105 cm, that is, this is a "small child" mode. In the second use mode (BOOSTER mode), the seat needs to face forward and the supporting leg needs to be folded before use. This mode is suitable for a child whose height is between 100 cm and 150 cm, that is, this is a "big child" mode.

In the first use mode, the extending and retracting of the sliding element may adjust the ground contact position of the supporting leg after it is unfolded, which can ensure that the upper end of the supporting leg supports the base at a right position, and can well support the safety seat and prevent the safety seat from overturning, thereby ensuring the safety of the safety seat when it is used. Meanwhile, there is enough space in the rear row of seats of the vehicle, and when the vehicle is impacted, the sufficient space in the forward and backward direction may form a good buffering effect, so that the small child will be well protected. Also, the large space is convenient to install the safety seat, and it is also convenient to put the small child in and out. Moreover, in the second use mode, that is, when the supporting leg is not needed, the supporting leg may be folded and hidden under the base, and then the safety seat is installed on the vehicle seat for the big child to use. Since the big child is usually taller than a small child, he/she needs more space. The second use mode of the safety seat not only increases the available space in the rear row of seats of the vehicle to satisfy the riding space of the big child, but also forms a better cushion when the vehicle is impacted since the space in the forward or backward direction is large enough, thereby providing a better safety protection for the big child and more space for the big child to put his/her feet, improving the riding comfort of the safety seat, and ensuring the safety and stability of the safety seat when it is used by the big child; meanwhile, when not in use, the supporting leg may be stored and hidden, reducing the overall size of the safety seat, reducing the packaging volume of the safety seat, and reducing the transportation cost. In addition, since the supporting leg is extended and retracted and is folded along with the sliding element, the overall size of the safety seat is changeable, so that it may be suitable for different types of vehicles although the space in the rear row is different due to the different types of vehicles, thereby greatly improving the application range of the safety seat of the embodiments of the present disclosure. Moreover, the safety seat may be used in two modes, i.e., for a small child and a big child, that is to say, the safety seat of the embodiments of the present disclosure is multi-purpose, which greatly improves the application range of the embodiments of the present disclosure, and thus the user may only buy one safety seat, which greatly reduces the cost of the user. Therefore, it is more attractive for the user, forms a product differentiation, and greatly enhances the market competitiveness of products.
25. The accommodating groove is provided, after the supporting leg is folded at the bottom of the base, the lower surface of the child safety seat is flat, making full use of the space of the base and further saving the space.
26. In the embodiments, the supporting leg is provided to at least have an unfolded position and a folded position, so that when the child safety seat is used, the child safety seat can be well supported by the supporting leg to prevent the child safety seat from overturning, and when it is not in use, the supporting leg may be folded at the bottom of the base to accommodate the supporting leg conveniently, and a volume of the child safety seat can be reduced to decrease the transportation cost. Also, in the embodiments of the present disclosure, the sliding element is telescopically disposed on the base, and the supporting leg is pivotally connected to the sliding element and extends and retracts with the sliding element, so that the supporting leg may be conveniently installed, pivoted well, and may also extend and retract with the extending and retracting of the sliding element. In this way, when the supporting leg is not in use, the sliding element may retract into the bottom of the base to minimize or even eliminate protruding of the sliding element from the front end of the base, thereby prevent interference with feet of the child and improving the riding experience of the child, further reducing the volume of the child safety seat to further decrease the transportation cost. Moreover, due to the engagement between the gear and rack, the movement of the sliding element to the extended position is linked with the pivoting of the supporting leg to the unfolded position, and the movement of the sliding element to the retracted position is linked with the pivoting of the supporting leg to the folded position, so that it is not necessary to push the supporting leg to retract after the supporting leg is folded, thereby simplifying the operation of the user. Thus, the embodiments of the present disclosure have advantages of simple operation, good user experience and high satisfaction degree, and provides differentiation from existing products and greatly enhances the market competitiveness of products.
27. The base assembly of the present disclosure is provided with the gear and the rack, so that linkage between the supporting leg and the sliding element provides excellent connection quality and operational experience.
28. The base assembly of the present disclosure is provided with a conversion structure, so that a moving distance of the rack relative to the base is different from a moving distance of the supporting leg and the sliding element relative to the base. In this way, the rack may move relative to the gear, thereby realizing the linkage between movements of the supporting leg and the sliding element.
29. The conversion structure of the base assembly of the present disclosure is formed by X-shaped units, which has a reliable structure and a large telescopic distance. The desired telescoping distance may be achieved by varying the number of X-shaped units forming the conversion structure. In addition, the conversion structure formed by the X-shaped units is easy to assemble.
30. The base of the present disclosure has a locking element, so that the supporting leg will not be accidentally opened when the child safety seat is not in use, thereby ensuring the reliability of the child safety seat.
31. The base of the present disclosure has a stepped portion, so that the sliding element will not accidentally protrude from the base when the child safety seat is not in use, thereby ensuring the reliability of the child safety seat.
32. The accommodating groove is provided, after the supporting leg is folded at the bottom of the base, the lower surface of the child safety seat is flat, making full use of the space of the base and further saving the space.

Those skilled in the art will easily think of other embodiments of the present disclosure after considering the specification and practicing the present disclosure as mentioned above. The present disclosure is intended to cover any variations, uses or adaptations of the present disclosure, which follow the general principles of the present disclosure and include common knowledge or common technical means in the technical field that are not disclosed in the present disclosure. Also, the specification and its embodiments are to be regarded as examples only, and the scope and spirit of the present disclosure are indicated by the claims of the present disclosure.

Although the present disclosure has been described with reference to the examples of typical embodiments, the terms used are illustrative and exemplary, rather than restrictive. Since the present disclosure may be embodied in various forms without departing from the spirit and essence of the present disclosure, it should be understood that the above-mentioned embodiments are not limited to any of the foregoing details, but should be interpreted in the broadest sense within the scope defined by the claims, so all changes that fall within the scope of the claims or their equivalents should be covered by the claims.

The subject-matter of the present invention relates, inter alia, to the following aspects:
1. A base assembly (1) comprising:
   a base (10);
   a supporting leg (20);
   a sliding element (30) telescopically disposed on the base (10), the supporting leg (20); being pivotally connected to the sliding element (30) and extending and retracting together with the sliding element (30); and
   a traction element (40) configured to pull the supporting leg (20) to move towards the base (10) as the supporting leg (20) rotates from an unfolded position to a folded position.
2. The base assembly (1) according to aspect 1, characterized in that, the traction element (40) is a flexible element.
3. The base assembly (1) according to aspect 2, characterized in that, the flexible element is a steel wire, a cord, or a webbing.
4. The base assembly (1) according to any of the previous aspects, characterized in that, the base assembly (1) further comprises a driving element (50) pivoted with the supporting leg (20), and the driving element (50) is configured to roll up the traction element (40) so that the supporting leg (20) is pulled to move towards the base (10).
5. The base assembly (1) according to aspect 4, characterized in that, the driving element (50) is disposed on the supporting leg (20), and the driving element (50) is integrally formed with the supporting leg (20) and formed as a part of the supporting leg (20); alternatively, the driving element (50) and the supporting leg (20) are separately formed and fixedly connected to each other by a fixing structure.
6. The base assembly (1) according to aspect 4 or aspect 5, characterized in that, the driving element (50) is located at an upper end of the supporting leg (20).
7. The base assembly (1) according to any of aspect 4 through aspect 6, characterized in that, the driving element (50) is shaped as a boss, and the driving element (50) is provided with an arc-shaped part matched with the traction element (40); alternatively, the driving element (50) is shaped as a pulley; alternatively, the driving element (50) is shaped as a column.
8. The base assembly (1) according to any of aspect 4 through aspect 7, characterized in that, a first end of the traction element (40) is connected with the base (10), and a second end of the traction element (40) is connected with one of the driving element (50) and an upper end of the supporting leg (20).
9. The base assembly (1) according to any of the previous aspects, characterized in that, an inner top wall of the base (10) is provided with a fixing column, and the first end of the traction element (40) is fixed on the fixing column by a first fastener.
10. The base assembly (1) according to any of the previous aspects, characterized in that, the base assembly (1) further comprises a stroke enlarging mechanism (60) having a first end connected with the base (10) and a second end connected with the supporting leg (20) through the traction element (40).
11. The base assembly (1) according to aspect 10, characterized in that, the stroke enlarging mechanism (60) is a rhombic telescopic frame.
12. The base assembly (1) according to any of aspect 10 or aspect 11, characterized in that, a fixing frame (120) is disposed in the base (10), and the first end of the stroke enlarging mechanism (60) is connected with the fixing frame (120) through a second fastener.
13. The base assembly (1) according to any of aspect 10 through aspect 12, characterized in that, the stroke enlarging mechanism (60) is a pulley mechanism.
14. The base assembly (1) according to aspect 13, characterized in that, the pulley mechanism comprises:
   a movable pulley (610) disposed on the sliding element (30);
   a fixed pulley (620) disposed on the base (10); and
   a linkage (630) connecting the movable pulley (610) and the fixed pulley (620);
   wherein the first end of the traction element (40) is connected with the movable pulley (610).
15. The base assembly (1) according to aspect 14, characterized in that, a first end of the linkage (630) is fixed on the sliding element (30), and a second end of the linkage (630) bypasses the movable pulley (610) and the fixed pulley (620) to be fixed on the sliding element (30).
16. The base assembly (1) according to any of aspect 14 or aspect 15, characterized in that, the fixed pulley (620) comprises a first fixed pulley (621) and a second fixed pulley (622) which are symmetrically disposed, the linkage (630) comprises a first linkage (631) and a second linkage (632) which are symmetrically disposed, a first end of the first linkage (631) is fixed on the sliding element (30), and a second end of the first linkage (631) bypasses the movable pulley (610) and the first fixed pulley (621) to be fixed on the sliding element (30); and a first end of the second linkage (632) is fixed on the sliding element (30), and a second end of the second linkage (632) bypasses the movable pulley (610) and the second fixed pulley (622) to be fixed on the sliding element (30).
17. The base assembly (1) according to aspect 13, characterized in that, the pulley mechanism comprises:
   a movable pulley (610) disposed on the sliding element (30);
   a first fixed pulley (621) disposed on the sliding element (30);
   a second fixed pulley (622) disposed on the base (10); and
   a linkage (630) connecting the first fixed pulley (621), the movable pulley (610) and the second fixed pulley (622);
   wherein the first end of the traction element (40) is connected with the movable pulley (610).
18. The base assembly (1) according to aspect 17, characterized in that, the base (10) is provided with a positioning column (150), the sliding element (30) is provided with an avoidance groove to avoid the positioning column (150), a first end of the linkage (630) is fixed on the positioning column (150), and a second end of the linkage (630) bypasses the first fixed pulley (621), the movable pulley (610) and the second fixed pulley (622) and is fixed on the sliding element (30).
19.The base assembly (1) according to aspect 14 or aspect 17 or claims dependent thereon, characterized in that, the sliding element (30) is provided with a sliding groove (341) for the movable pulley (610) to slide.
20. The base assembly (1) according to aspect 10 or any aspect dependent thereon, characterized in that, the base assembly (1) further comprises a supporting leg indicator (70) linked with the second end of the stroke enlarging mechanism (60), and the sliding element (30) is provided with an indication window (330) for at least partially exposing the supporting leg indicator (70).
21. The base assembly (1) according to any of the previous aspects, characterized in that, a buffer elastic element (410) is disposed at a connection of a second end of the traction element (40) and the supporting leg (20).
22. The base assembly (1) according to any of the previous aspects, characterized in that, the base assembly (1) further comprises a base bracket (160) disposed in the base (10), the sliding element (30) comprises a sliding bracket (340) slidably connected to the base bracket (160), a sliding groove (341) is provided on one of the base bracket (160) and the sliding bracket (340), and a sliding rod (161) matched with the sliding groove (341) is provided on the other of the base bracket (160) and the sliding bracket (340).
23. A child safety seat for a vehicle comprising:
   a base assembly (1) according to any one of aspects 1 to 22; and
   a seat (2) disposed on the base assembly (1).
24. The child safety seat according to aspect 23, characterized in that, the seat (2) is rotatably disposed on the base (10) and has at least a forward position and a backward position, the child safety seat has a first use mode and a second use mode, in the first use mode, the sliding element (30) extends outside and the supporting leg (20) is unfolded to form a ground-contact support, and in the second use mode, the sliding element (30) retracts and the supporting leg (20) is folded at a bottom of the base (10).
25. The child safety seat according to any of aspect 23 or aspect 24, characterized in that, an accommodating groove (170) for accommodating the supporting leg (20) is provided on the bottom of the base (10), and after the supporting leg (20) is folded at the bottom of the base (10), a lower surface of the supporting leg (20) does not protrude from a bottom surface of the base (10).
26. A base assembly (1) comprising:
   a base (10);
   a supporting leg (20) provided with a gear (550); and
   a sliding element (30) telescopically disposed on the base (10) and provided with a rack (540);
   wherein the gear (550) is engaged with the rack (540), so that movement of the sliding element (30) to an extended position is linked with pivoting of the supporting leg (20) to an unfolded position, and movement of the sliding element (30) to a retracted position is linked with pivoting of the supporting leg (20) to a folded position.
27. The base assembly (1) according aspect 26, characterized in that, the base assembly (1) further comprises a conversion structure (90) having a first end (910) connected to the sliding element (30) and a second end (920) connected to the base (10), the rack being fixed in a position between the first end and (910) the second end (920), and
   the conversion structure (90) is correspondingly elongated or shortened in response to increasing or decreasing of a distance between the sliding element (30) and the base (10).
28. The base assembly (1) according to aspect 27, characterized in that, the conversion structure (90) is composed of at least one X-shaped unit.
29. The base assembly (1) according to aspect 28, characterized in that, each of the at least one X-shaped unit is formed by two sheets pivotally connected to each other.
30. The base assembly (1) according to any of aspect 26 through aspect 29, characterized in that, the base assembly (1) further comprises a first restoring element (520) configured to constantly bias the supporting leg (20) towards the unfolded position.
31. The base assembly (1) according to any of aspect 26 through aspect 30, characterized in that, the base assembly (1) further comprises a second restoring element (530) configured to constantly bias the sliding element (30) towards the extended position.
32. The base assembly (1) according to aspect 31, characterized in that, the second restoring element (530) is a tension spring, and has an end fixed to the base (10) and the other end fixed to the sliding element (30).
33. The base assembly (1) according to any of aspect 26 through aspect 32, characterized in that, the base (10) comprises a locking element (180) operatively locking the supporting leg (20) to the folded position.
34. The base assembly (1) according to any of aspect 26 through aspect 33, characterized in that, the base (10) comprises a stepped portion (190), wherein the stepped portion (190) prevents the sliding element (30) from moving to the extended position by abutting against the supporting leg (20) when the supporting leg (20) is in the folded position.
35. A child safety seat for a vehicle comprising:
   a base assembly (1) according to any one of aspects 26 to 34; and a seat disposed on the base assembly (1).

## Claims

1. A base assembly (1) comprising:
a base (10);
a supporting leg (20) provided with a gear (550); and
a sliding element (30) telescopically disposed on the base (10) and provided with a rack (540);
wherein the gear (550) is engaged with the rack (540), so that movement of the sliding element (30) to an extended position is linked with pivoting of the supporting leg (20) to an unfolded position, and movement of the sliding element (30) to a retracted position is linked with pivoting of the supporting leg (20) to a folded position.

2. The base assembly (1) according claim 1, **characterized in that**, the base assembly (1) further comprises a conversion structure (90) having a first end (910) connected to the sliding element (30) and a second end (920) connected to the base (10), the rack being fixed in a position between the first end and (910) the second end (920), and
the conversion structure (90) is correspondingly elongated or shortened in response to increasing or decreasing of a distance between the sliding element (30) and the base (10).

3. The base assembly (1) according to claim 2, **characterized in that**, the conversion structure (90) is composed of at least one X-shaped unit.

4. The base assembly (1) according to claim 3, **characterized in that**, each of the at least one X-shaped unit is formed by two sheets pivotally connected to each other.

5. The base assembly (1) according to claim 3, **characterized in that**, the rack (550) is fixed at a pivot shaft of the leftmost X-shaped unit of the at least one X-shaped unit.

6. The base assembly (1) according to claim 1, **characterized in that**, the base (10) comprises an accommodating groove (170) for accommodating the supporting leg and a stepped portion (190) formed as a side wall of the accommodating groove, and the rack (540) and the gear (550) are configured to start engaging with each other when the stepped portion (190) no longer abuts against the supporting leg (20).

7. The base assembly (1) according to claim 1, **characterized in that**, a moving distance of the rack (540) relative to the gear (550) and a moving distance of the sliding element (30) relative to the base (10) conform to a specific proportional relationship therebetween.

8. The base assembly (1) according to claim 1, **characterized in that**, the base (10) has a fixing frame (120) and a base bracket (160), the sliding element (30) includes a sliding bracket (340) slidably connected to the base bracket (160) and a housing (350) connected to the sliding bracket (340), and a protective cover (250) is provided in the housing (350) and pivot together with the supporting leg (20).

9. The base assembly (1) according to claim 8, **characterized in that**, a pivot shaft (80) passes through the sliding bracket (340), the protective cover (250) and the gear (550).

10. The base assembly (1) according to any of claim 1 through claim 9, **characterized in that**, the base assembly (1) further comprises a first restoring element (520) configured to constantly bias the supporting leg (20) towards the unfolded position.

11. The base assembly (1) according to any of claim 1 through claim 10, **characterized in that**, the base assembly (1) further comprises a second restoring element (530) configured to constantly bias the sliding element (30) towards the extended position.

12. The base assembly (1) according to claim 11, **characterized in that**, the second restoring element (530) is a tension spring, and has an end fixed to the base (10) and the other end fixed to the sliding element (30).

13. The base assembly (1) according to any of claim 1 through claim 12, **characterized in that**, the base (10) comprises a locking element (180) operatively locking the supporting leg (20) to the folded position.

14. The base assembly (1) according to any of claim 1 through claim 13, **characterized in that**, the base (10) comprises a stepped portion (190), wherein the stepped portion (190) prevents the sliding element (30) from moving to the extended position by abutting against the supporting leg (20) when the supporting leg (20) is in the folded position.

15. A child safety seat for a vehicle comprising:
a base assembly (1) according to any one of claims 1 to 14; and
a seat disposed on the base assembly (1).
